(19) 

**Europäisches Patentamt**
**European Patent Office**
**Office européen des brevets**

(11) **EP 4 589 834 A1**

(12) **EUROPEAN PATENT APPLICATION**
published in accordance with Art. 153(4) EPC

(43) Date of publication:
**23.07.2025 Bulletin 2025/30**

(21) Application number: **22958769.6**

(22) Date of filing: **14.09.2022**

(51) International Patent Classification (IPC):
**H02M 7/49** (2007.01)    **H02M 7/48** (2007.01)

(52) Cooperative Patent Classification (CPC):
**H02M 7/48; H02M 7/49**

(86) International application number:
**PCT/JP2022/034403**

(87) International publication number:
**WO 2024/057441 (21.03.2024 Gazette 2024/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventors:
• **KONO, Yoshiyuki**
  **Tokyo 100-8310 (JP)**
• **UDA, Ryosuke**
  **Tokyo 100-8310 (JP)**
• **KAJIYAMA, Takuya**
  **Tokyo 100-8310 (JP)**

(74) Representative: **Witte, Weller & Partner
Patentanwälte mbB
Postfach 10 54 62
70047 Stuttgart (DE)**

(54) **POWER CONVERSION DEVICE AND OFFSHORE WIND POWER GENERATION SYSTEM**

(57) A power conversion device (1) includes a power converter (2) including an arm circuit having a plurality of converter cells (7F, 7H) connected in cascade. Each of the converter cells includes a bridge circuit (30F, 30H) including a plurality of semiconductor switching elements (31), and a power storage element (32) connected to a first input/output terminal (P1) on a high potential side and a second input/output terminal (P2) on a low potential side through the bridge circuit. One or more of the converter cells are full-bridge converter cells (7F). Among four arms that constitute the bridge circuit (30F) of the full-bridge converter cell, an arm (39C) between a high potential-side node (36p) of the power storage element (32) and the second input/output terminal (P2), or an arm (39B) between a low potential-side node (36n) of the power storage element (32) and the first input/output terminal (P1) includes a resistor element (34) connected in series with the semiconductor switching element.

FIG.3

(A)

(B)

**Description**

TECHNICAL FIELD

The present disclosure relates to a power conversion device anvd an offshore wind power generation system.

BACKGROUND ART

Modular multilevel converters (MMCs) including a plurality of unit converters connected in cascade are known as typical power conversion devices for self-commutated high voltage direct current (HDVC) transmission. Hereinafter, unit converters may be referred to as "converter cells" or "submodules" (SM). Typically, a converter cell includes a bridge circuit including a plurality of switching elements, and a power storage element (typically, capacitor) connected in parallel with the bridge circuit.

MMCs are advantageous in that loss and harmonics can be reduced compared with conventional two-level converters. However, the voltage of the power storage element (that is, capacitor voltage) of each individual converter cell needs to be maintained in the vicinity of a target value in order to obtain a desired control output. If the capacitor voltage deviates from the target value, the output voltage of the converter cell is not as instructed, so that the control characteristics may be deteriorated, for example, due to occurrence of unintended circulating current. In a serious case, the capacitor voltage excessively rises or excessively lowers to the level of overvoltage (OV) protection or undervoltage (UV) protection in any converter cell, which may cause the MMC to stop operating.

In order to prevent overvoltage of capacitor voltage, a DC chopper is known, which connects a series circuit including a semiconductor switch and a resistor in parallel with a power storage element (for example, see United States Patent Application Publication No. 2011/163702 (PTL 1)). The DC chopper is provided to allow excessive capacitor voltage to be consumed by the resistor before the capacitor voltage becomes overvoltage.

Another problem in MMCs is that excessive short-circuit current flows through the MMC at a time of a short-circuit failure of a DC circuit, causing deterioration of elements in the MMC. In order to suppress short-circuit current at a time of a direct current failure, WO 2016/167117 (PTL 2) discloses a power converter in which each converter cell in a first arm circuit on a high potential side has a full-bridge configuration and each converter cell in a second arm circuit on a low potential side has a half-bridge configuration.

As disclosed in United States Patent Application Publication No. 2013/0308235 (PTL 3), a similar effect can be achieved by a configuration in which, for each of a first arm circuit and a second arm circuit, half of converter cells have a full-bridge configuration and the other half of converter cells have a half-bridge configuration.

CITATION LIST

PATENT LITERATURE

PTL 1: United States Patent Application Publication No. 2011/163702
PTL 2: WO 2016/167117
PTL 3: United States Patent Application Publication No. 2013/0308235

SUMMARY OF INVENTION

TECHNICAL PROBLEM

The inventors of the present application have considered combining the DC chopper as described above, which is a configuration for preventing overvoltage of a power storage element of each converter cell, with a hybrid of half-bridge cells and full-bridge cells, which is a configuration for suppressing short-circuit current at a time of a short-circuit failure of a DC circuit. However, merely connecting a series circuit including a semiconductor switch and a resistor in parallel with a power storage element of each converter cell has problems in terms of space and cost.

The present disclosure is made based on the above consideration, and an object of the present disclosure is to provide a MMC-type power conversion device that achieves both of the function for preventing overvoltage of a power storage element of a converter cell and the function for suppressing short-circuit current flowing at a time of a failure in a DC circuit, in a space efficient manner.

SOLUTION TO PROBLEM

A power conversion device according to an embodiment includes a power converter including an arm circuit including a plurality of converter cells connected in cascade, and a control device to control the power converter. Each of the converter cells includes a first input/output terminal on a high potential side and a second input/output terminal on a low potential side, a bridge circuit including a plurality of semiconductor switching elements, and a power storage element connected to the first input/output terminal and the second input/output terminal through the bridge circuit. One or more of the converter cells are full-bridge converter cells. The bridge circuit of each of the full-bridge converter cells includes a first arm connecting a high potential-side node of the power storage element to the first input/output terminal, a second arm connecting a low potential-side node of the power storage element to the first input/output terminal, a third arm connecting the high potential-side node of the power storage element to the second input/output terminal, and a fourth arm connecting the low potential-side node of the power storage element to the second input/output terminal. Each of the first arm, the second arm, the third arm, and the fourth arm has a semiconductor switching element. The second arm or the third arm includes a resistor element connected in series with the semiconductor switching element.

ADVANTAGEOUS EFFECTS OF INVENTION

According to the embodiment above, one or more of a plurality of converter cells that constitute an arm circuit of the power converter are full-bridge converter cells. Among four arms that constitute the full-bridge converter cell, the second arm or the third arm includes a resistor element connected in series with the semiconductor switching element. This configuration can provide a MMC-type power conversion device that achieves both of the function for preventing overvoltage of a power storage element of a converter cell and the function for suppressing short-circuit current flowing at a time of a failure in a DC circuit, in a space efficient manner.

BRIEF DESCRIPTION OF DRAWINGS

Fig. 1 is a schematic configuration diagram of a power conversion device according to a first embodiment.
Fig. 2 is a circuit diagram showing a configuration example of a half-bridge converter cell.
Fig. 3 is a circuit diagram showing a configuration example of a full-bridge converter cell.
Fig. 4 is a circuit diagram showing a configuration of the full-bridge converter cell in (A) in Fig. 3 according to a modification.
Fig. 5 is a diagram showing a path of short-circuit current at a time of a short-circuit failure of a DC circuit.
Fig. 6 is a circuit diagram illustrating a path of DC short-circuit current flowing through an arm circuit.
Fig. 7 is a circuit diagram illustrating a path of DC short-circuit current flowing through an arm circuit in a case where a bypass circuit is provided.
Fig. 8 is a block diagram showing a hardware configuration example of a control device shown in Fig. 1.
Fig. 9 is a block diagram illustrating a functional configuration example of the control device shown in Fig. 1.
Fig. 10 is a block diagram illustrating a configuration example of a basic controller shown in Fig. 9.
Fig. 11 is a block diagram illustrating a configuration example of an arm controller.
Fig. 12 is a block diagram illustrating a configuration example of an individual cell controller shown in Fig. 11.
Fig. 13 is a block diagram showing a configuration example of an individual voltage controller shown in Fig. 12 in detail.
Fig. 14 is a flowchart showing a control procedure for a half-bridge converter cell.
Fig. 15 is a flowchart showing a control procedure for a full-bridge converter cell.
Fig. 16 is a block diagram showing a configuration example of the individual cell controller corresponding to the full-bridge converter cell in the power conversion device according to a second embodiment.
Fig. 17 is a block diagram showing a configuration example of the individual cell controller corresponding to the half-bridge converter cell in the power conversion device according to the second embodiment.
Fig. 18 is a flowchart showing a control procedure for the full-bridge converter cell in the power conversion device according to the second embodiment.
Fig. 19 is a flowchart showing a control procedure for the half-bridge converter cell in the power conversion device according to the second embodiment.
Fig. 20 is a schematic configuration diagram of the power conversion device according to a third embodiment.
Fig. 21 is a flowchart showing a high-speed discharge procedure by a discharge controller in Fig. 20.
Fig. 22 is a block diagram showing a configuration example of an offshore wind power generation system.
Fig. 23 is a block diagram showing a configuration example of a wind power generation device that constitutes the offshore wind power generation system in Fig. 22.

DESCRIPTION OF EMBODIMENTS

Embodiments will be described in detail below with reference to the drawings. The same or corresponding parts are denoted by the same reference signs and a description thereof is not repeated.

First Embodiment.

[Overall Configuration of Power Conversion Device]

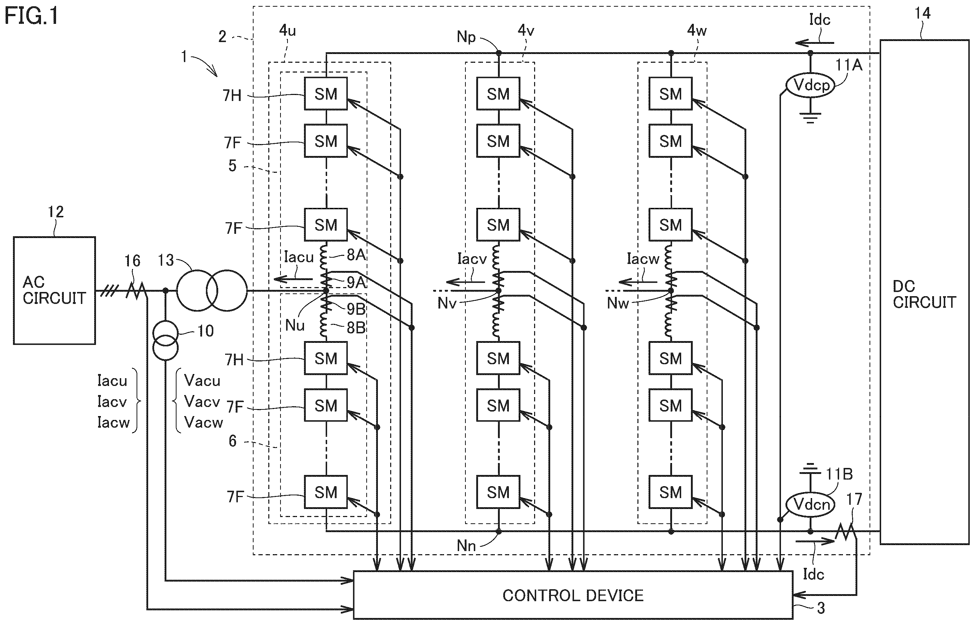

Fig. 1 is a schematic configuration diagram of a power conversion device 1 according to a first embodiment.

Referring to Fig. 1, power conversion device 1 is configured with a modular multilevel converter (MMC) including a plurality of converter cells cascaded to each other. Power conversion device 1 performs power conversion between a DC circuit 14 and an AC circuit 12. Power conversion device 1 includes a power converter 2 and a control device 3.

Power converter 2 includes a plurality of leg circuits 4u, 4v, and 4w (denoted as leg circuit 4 when they are collectively referred to or any one of them is referred to) connected in parallel with each other between a positive DC terminal (that is, high potential-side DC terminal) Np and a negative DC terminal (that is, low potential-side DC terminal) Nn.

Leg circuit 4 is provided for each of a plurality of phases forming alternating current. Leg circuit 4 is connected between AC circuit 12 and DC circuit 14 to perform power conversion between those circuits. In Fig. 1, AC circuit 12 is a three-phase alternating current system, and three leg circuits 4u, 4v, and 4w are provided respectively corresponding to U phase, V phase, and W phase.

AC input terminals Nu, Nv, and Nw respectively provided for leg circuits 4u, 4v, and 4w are connected to AC circuit 12 through a transformer 13. AC circuit 12 is, for example, an AC power system including an AC power source. In Fig. 1, for simplification of illustration, the connection between AC input terminals Nv, Nw and transformer 13 is not shown.

High potential-side DC terminal Np and low potential-side DC terminal Nn connected in common to leg circuits 4 are connected to DC circuit 14. DC circuit 14 is, for example, a DC power system including a DC power transmission network or a DC terminal of another power conversion device. In the latter case, two power conversion devices are coupled to form a back to back (BTB) system for connecting AC power systems having different rated frequencies.

AC circuit 12 may be connected through an interconnecting reactor, instead of using transformer 13 in Fig. 1. Furthermore, instead of AC input terminals Nu, Nv, and Nw, leg circuits 4u, 4v, and 4w may be provided with respective primary windings, and leg circuits 4u, 4v, and 4w may be connected in terms of alternating current to transformer 13 or the interconnecting reactor through secondary windings magnetically coupled to the primary windings. In this case, the primary windings may be reactors 8A and 8B described below. Specifically, leg circuits 4 are electrically (that is, in terms of direct current or alternating current) connected to AC circuit 12 through connections provided for leg circuits 4u, 4v, and 4w, such as AC input terminals Nu, Nv, and Nw or the primary windings.

Leg circuit 4u includes an upper arm circuit 5 from high potential-side DC terminal Np to AC input terminal Nu and a lower arm circuit 6 from low potential-side DC terminal Nn to AC input terminal Nu. AC input terminal Nu that is a connection point between upper arm circuit 5 and lower arm circuit 6 is connected to transformer 13. High potential-side DC terminal Np and low potential-side DC terminal Nn are connected to DC circuit 14. Upper arm circuit 5 and lower arm circuit 6 may be collectively referred to as arm circuit. Leg circuits 4v and 4w have a similar configuration, and hereinafter the configuration of leg circuit 4u is explained as a representative example.

Upper arm circuit 5 includes a plurality of converter cells 7 (7H, 7F) connected in cascade and a reactor 8A. Converter cells 7 and reactor 8A are connected in series. Similarly, lower arm circuit 6 includes a plurality of converter cells 7 connected in cascade and a reactor 8B. Converter cells 7 and reactor 8B are connected in series. In the following description, the number of converter cells 7 included in each of upper arm circuit 5 and lower arm circuit 6 is denoted as Ncell. Ncell is $\geq$ 2.

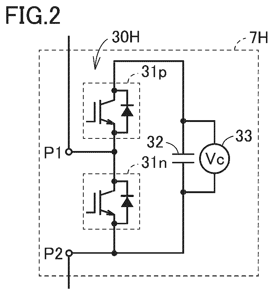

One or more of Ncell converter cells 7 that constitute each arm circuit are full-bridge converter cells 7F each including four switching elements. The remaining converter cells 7 are half-bridge converter cells 7H each including two switching elements. Specific configuration examples of converter cells 7H and 7F will be described later with reference to Fig. 2 to Fig. 4.

Reactor 8A may be inserted at any position in upper arm circuit 5 of leg circuit 4u, and reactor 8B may be inserted at any position in lower arm circuit 6 of leg circuit 4u. A plurality of reactors 8A and a plurality of reactors 8B may be provided. The inductances of the reactors may be different from each other. Only reactor 8A of upper arm circuit 5 or only reactor 8B of lower arm circuit 6 may be provided. The transformer connection may be adjusted to cancel the magnetic flux of DC component current, and leakage reactance of the transformer may act on AC component current, as an alternative to the reactor. The provision of reactors 8A and 8B can suppress abrupt increase of accident current at a time of an accident in AC circuit 12 or DC circuit 14.

Power conversion device 1 further includes an AC voltage detector 10, an AC current detector 16, DC voltage detectors 11A and 11B, arm current detectors 9A and 9B provided for each leg circuit 4, and a DC current detector 17 as detectors for measuring the quantity of electricity (current, voltage, etc.) used in control. Signals detected by these detectors are input to control device 3.

In Fig. 1, the signal lines of signals input from the detectors to control device 3 and the signal lines of signals input and output between control device 3 and converter cells 7 are depicted partially collectively for the sake of ease of illustration, but, in actuality, they are provided individually for each detector and each converter cell 7. Signal lines between each converter cell 7 and control device 3 may be provided separately for transmission and reception. The signal lines are formed with, for example, optical fibers.

The detectors will now be specifically described.

AC voltage detector 10 detects U-phase AC voltage Vacu, V-phase AC voltage Vacv, and W-phase AC voltage Vacw of AC circuit 12. In the following description, Vacu, Vacv, and Vacw may be collectively referred to as Vac.

AC current detector 16 detects U-phase AC current Iacu, V-phase AC current Iacv, and W-phase AC current Iacw of AC circuit 12. In the following description, Iacu, Iacv, and Iacw may be collectively referred to as Iac.

DC voltage detector 11A detects DC voltage Vdcp at high potential-side DC terminal Np connected to DC circuit 14. DC voltage detector 11B detects DC voltage Vdcn at low potential-side DC terminal Nn connected to DC circuit 14. The difference between DC voltage Vdcp and DC voltage Vdcn is defined as DC voltage Vdc. DC current detector 17 detects DC current Idc flowing through high potential-side DC terminal Np or low potential-side DC terminal Nn.

Arm current detectors 9A and 9B provided in leg circuit 4u for U phase respectively detect upper arm current Ipu flowing through upper arm circuit 5 and lower arm current Inu flowing through lower arm circuit 6. Arm current detectors 9A and 9B provided in leg circuit 4v for V phase respectively detect upper arm current Ipv and lower arm current Inv. Arm current detectors 9A and 9B provided in leg circuit 4w for W phase respectively detect upper arm current Ipw and lower arm current Inw. In the following description, upper arm currents Ipu, Ipv, and Ipw may be collectively referred to as upper arm current Iarmp, lower arm currents Inu, Inv, and Inw may be collectively referred to as lower arm current Iarmn, and upper arm current Iarmp and lower arm current Iarmn may be collectively referred to as Iarm.

[Configuration Example of Half-Bridge Converter Cell]

Fig. 2 is a circuit diagram showing a configuration example of half-bridge converter cell 7H. This converter cell 7H includes a series of two switching elements 31p and 31n connected in series, a power storage element 32, a voltage detector 33, a high potential-side input/output terminal P1, and a low potential-side input/output terminal P2. The series of switching elements 31p and 31n and power storage element 32 are connected in parallel. Voltage detector 33 detects voltage Vc between both ends of power storage element 32. In the following description, high potential-side input/output terminal P1 and low potential-side input/output terminal P2 may be simply referred to as input/output terminals P1 and P2.

Switching elements 31p and 31n are each configured, for example, such that a freewheeling diode (FWD) is connected in anti-parallel with a self-turn-off semiconductor switching element such as an insulated gate bipolar transistor (IGBT) or a gate commutated turn-off (GCT) thyristor.

Switching elements 31p and 31n are preferably formed on a silicon carbide substrate so that switching loss is reduced.

Switching element 31n have both terminals respectively connected to input/output terminals P1 and P2. Power storage element 32 is therefore connected to a pair of input/output terminals P1 and P2 through a half bridge circuit 30H including two switching elements 31p and 31n.

With switching operation of switching elements 31p and 31n, converter cell 7H outputs voltage Vc of power storage element 32 or zero voltage between input/output terminals P1 and P2. When switching element 31p turns on and switching element 31n turns off, voltage Vc of power storage element 32 is output from converter cell 7H. When switching element 31p turns off and switching element 31n turns on, converter cell 7H outputs zero voltage.

Instead of switching element 31n, switching element 31p may have both terminals respectively connected to input/output terminals P1 and P2. Also in this case, with switching operation of switching elements 31p and 31n, converter cell 7H outputs voltage Vc of power storage element 32 or zero voltage between input/output terminals P1 and P2.

[Configuration Example of Full-Bridge Converter Cell]

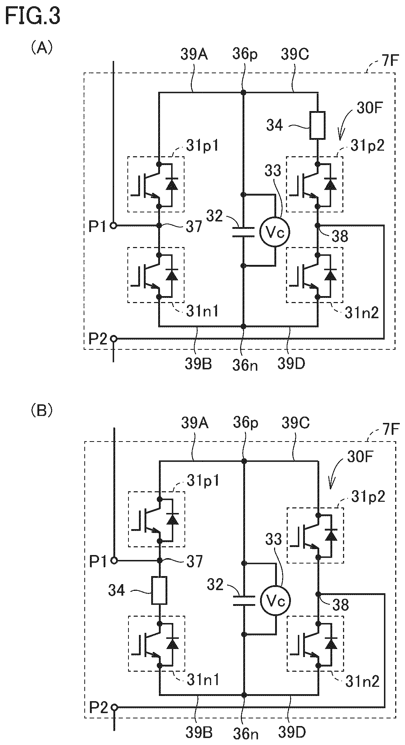

Fig. 3 is a circuit diagram showing a configuration example of full-bridge converter cell 7F. This converter cell 7F includes a first series of two switching elements 31p1 and 31n1 connected in series, a second series of two switching elements 31p2 and 31n2 connected in series, a power storage element 32, a voltage detector 33, a high potential-side input/output terminal P1, a low potential-side input/output terminal P2, and a resistor element 34. The first series, the second series, and power storage element 32 are connected in parallel between a high potential-side node 36p and a low potential-side node 36n. Voltage detector 33 detects voltage Vc between both ends of power storage element 32. Converter cell 7F in (A) in Fig. 3 and converter cell 7F in (B) in Fig. 3 differ in arrangement position of resistor element 34 but are common in other respects.

Switching elements 31p1, 31n1, 31p2, and 31n2 are each configured, for example, such that a freewheeling diode is connected in anti-parallel with a self-turn-off semiconductor switching element such as IGBT or GCT thyristor.

Switching elements 31p1 and 31n1 are preferably formed on a silicon carbide substrate so that switching loss is reduced. On the other hand, since the switching frequency of switching elements 31p2 and 31n2 is not high, these switching elements 31p2 and 31n2 may be formed on a silicon substrate which is low in cost.

A middle point 37 of switching element 31p1 and switching element 31n1 is connected to high potential-side input/output terminal P1. Similarly, a middle point 38 of switching element 31p2 and switching element 31n2 is connected to low potential-side input/output terminal P2. Power storage element 32 is therefore connected to a pair of input/output terminals P1 and P2 through full-bridge circuit 30F including switching elements 31p1, 31n1, 31p2, and 31n2.

In a case of (A) in Fig. 3, resistor element 34 is connected in series with switching element 31p2 between high potential-side node 36p and middle point 38. In a case of (B) in Fig. 3, resistor element 34 is connected in series with switching element 31n1 between low potential-side node 36n and middle point 37.

In other words, full-bridge circuit 30F includes a first arm 39A between high potential-side node 36p of power storage element 32 and high potential-side input/output terminal P1 (middle point 37), a second arm 39B between low potential-side node 36n of power storage element 32 and high potential-side input/output terminal P1 (middle point 37), a third arm 39C between high potential-side node 36p of power storage element 32 and low potential-side input/output terminal P2 (middle point 38), and a fourth arm 39D between low potential-side node 36n of power storage element 32 and low potential-side input/output terminal P2 (middle point 38). Each arm 39 includes semiconductor switching element 31. In the following description, first arm 39A, second arm 39B, third arm 39C, and fourth arm 39D may be simply referred to as arms 39A, 39B, 39C, and 39D.

Here, resistor element 34 is provided in series with semiconductor switching element 31 in one of second arm 39B or third arm 39C. Resistor element 34 is not provided in either of first arm 39A and fourth arm 39D.

In a case of (A) in Fig. 3, resistor element 34 is connected in series with switching element 31p2 in third arm 39C between high potential-side node 36p and middle point 38. In this case, switching element 31n2 connected to fourth arm 39D is controlled to a normally closed state (on state) except at a time of a failure of AC circuit 12 or DC circuit 14. Switching element 31p2 in series with resistor element 34 is controlled in a normally open state (off state) during normal time and to intermittently turn on and off when power storage element 32 suffers overvoltage. As a result, energy of power storage element 32 is discharged to the resistor so that voltage of power storage element 32 is lowered.

On the other hand, switching element 31p1 connected to first arm 39A and switching element 31n1 connected to second arm 39B are controlled to repeatedly turn on and off in a complementary manner, for example, in accordance with phase shift pulse width modulation control, except at a time of a failure of AC circuit 12 or DC circuit 14. When switching element 31p1 turns on and switching element 31n1 turns off, voltage Vc of power storage element 32 is output from converter cell 7F, in the same manner as half-bridge converter cell 7H. When switching element 31p1 turns off and switching element 31n1 turns on, converter cell 7F outputs zero voltage. As described later, the method of switching control for switching elements 31p1 and 31n1 is not limited to phase shift pulse width modulation, and other control methods may be employed.

In a case of (B) in Fig. 3, resistor element 34 is connected in series with switching element 31n1 in second arm 39C between low potential-side node 36n and middle point 37. In this case, switching element 31p1 connected to first arm 39A is controlled in a normally closed state except at a time of a failure of AC circuit 12 or DC circuit 14. Switching element 31n1 in series with resistor element 34 is controlled in an open state during normal time and to intermittently turn on and off when power storage element 32 suffers overvoltage. As a result, energy of power storage element 32 is discharged to the resistor so that voltage of power storage element 32 is lowered.

On the other hand, switching element 31p2 connected to third arm 39C and switching element 31n2 connected to fourth arm 39D are controlled to repeatedly turn on and off in a complementary manner, for example, in accordance with pulse width modulation control, except at a time of a failure of AC circuit 12 or DC circuit 14. When switching element 31n2 turns on and switching element 31p2 turns off, voltage Vc of power storage element 32 is output from converter cell 7F. When switching element 31n2 turns off and switching element 31p2 turns on, converter cell 7F outputs zero voltage. As described later, the method of switching control for switching elements 31p2 and 31n2 is not limited to phase shift pulse width modulation, and other control methods may be employed.

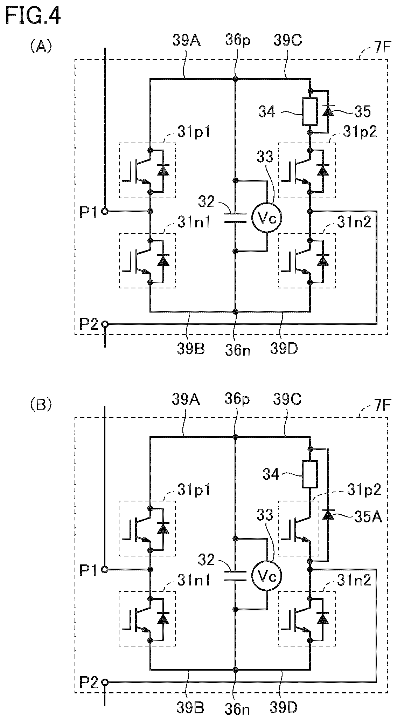

Fig. 4 is a circuit diagram showing a configuration of full-bridge converter cell 7F in (A) in Fig. 3 according to a modification. Specifically, converter cell 7F in (A) in Fig. 4 differs from converter cell 7F in (A) in Fig. 3 in that it further includes a diode 35 as a rectifier element connected in parallel with resistor element 34 and in a reverse bias direction.

Further, in a case of converter cell 7F in (B) in Fig. 4, a freewheeling diode FWD is not connected in antiparallel with switching element 31p2 in series with resistor element 34. Instead, a diode 35A is connected as a rectifier element in parallel with the series of resistor element 34 and switching element 31p2 and in a reverse bias direction.

When switching element 31p2 is configured as a module, a self-turn-off semiconductor switching element and a freewheeling diode are contained in one package and cannot be separated. In this case, as shown in (A) in Fig. 4, diode 35 is connected in antiparallel with resistor element 34.

On the other hand, a self-turn-off semiconductor switching element and a freewheeling diode that constitute switching element 31p2 may be each configured as a separate body. In this case, as shown in (B) in Fig. 4, instead of freewheeling diode FWD, a diode 35A may be connected in antiparallel with the series of resistor element 34 and switching element 31p2. This configuration can reduce the number of diodes used in converter cell 7F.

Diode 35 or 35A and the freewheeling diode in each switching element 31 serve as a current path when power storage element 32 of each converter cell 7 is charged at start-up of power conversion device 1. This is because the drive voltage of switching elements 31p1, 31n1, 31p2, and 31n2 is based on the voltage of power storage element 32 and therefore the semiconductor switching elements are in the all-off state at start-up of power conversion device 1. Without diodes 35, 35A, loss is caused by resistor element 34.

In other respects, converter cell 7F in (A) and (B) in Fig. 4 is similar to that of (A) in Fig. 3, and the same or corresponding parts are denoted by the same reference signs and will not be further elaborated. In converter cell 7F in (B) in Fig. 3, diode 35 may be provided in parallel with resistor element 34 and in a reverse bias direction, and diode 35A may be provided in parallel with the series of resistor element 34 and switching element 31n1 and in a reverse bias direction, in the same manner as described above.

[Path of Short-Circuit Current in Short-Circuit Failure of DC Circuit]

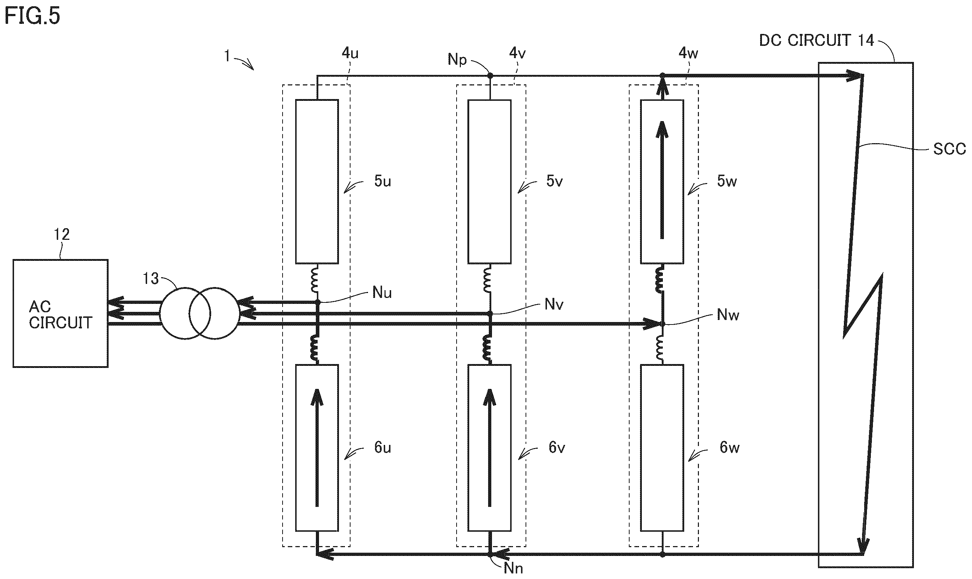

Referring to Fig. 5 to Fig. 7, the current path at a time of a short-circuit failure of the DC circuit will be described below.

Fig. 5 is a diagram showing a path of short-circuit current at a time of a short-circuit failure of the DC circuit. In Fig. 5, the u-phase upper arm circuit, the v-phase upper arm circuit, and the w-phase upper arm circuit are denoted as 5u, 5v, 5w, respectively. Similarly, the u-phase lower arm circuit, the v-phase lower arm circuit, and the w-phase lower arm circuit are denoted as 6u, 6v, 6w, respectively.

Referring to Fig. 5, short-circuit current SCC flowing from the high potential side to the low potential side inside DC circuit 14 flows in a direction from low potential-side DC terminal Nn toward high potential-side DC terminal Np inside power conversion device 1. Here, which of a plurality of arm circuits 5u, 5v, 5w, 6u, 6v, and 6w the short-circuit current flows differs according to the phase of AC current flowing between AC circuit 12 and power conversion device 1. In a case of Fig. 5, current flows from low potential-side DC terminal Nn through u-phase lower arm circuit 6u and v-phase lower arm circuit 6v to AC circuit 12, and current flows in a direction from AC circuit 12 through w-phase upper arm circuit 5w to high potential-side DC terminal Np.

A path of DC short-circuit current flowing through each arm circuit 5, 6 will now be described in detail. Hereinafter, a current path in arm circuits 5 and 6 with no bypass circuit 41 will be first described, and then a current path with a bypass circuit 41 will be described.

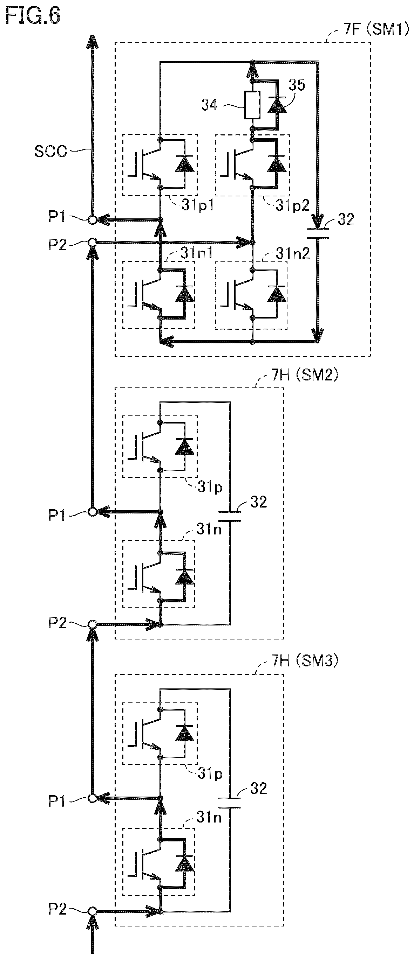

Fig. 6 is a circuit diagram illustrating a path of DC short-circuit current flowing through an arm circuit. In a circuit diagram in Fig. 6, a path of DC short-circuit current SCC is shown, which flows through one full-bridge converter cell 7F (SM1) and two half-bridge converter cells 7H (SM2, SM3), which are a part of an arm circuit. The path of DC short-circuit current SCC is shown by a thick arrow in Fig. 6. Fig. 6 shows a case where resistor element 34 is provided in third arm 39C of full-bridge converter cell 7F, as shown in (A) in Fig. 3 and Fig. 4. The same applies to a case where resistor element 34 is provided in second arm 39B as shown in (B) in Fig. 3.

Referring to Fig. 6, at a time of a short-circuit failure of DC circuit 14, all switching elements 31 that constitute each converter cell 7 are controlled to an open state (off state) in order to interrupt discharge current from power storage elements 32. In this case, in half-bridge converter cell 7H (SM2, SM3), DC short-circuit current SCC flows through the freewheeling diode connected in antiparallel with switching element 31n.

On the other hand, in full-bridge converter cell 7F (SM1), DC short-circuit current SCC passes through low potential-side input/output terminal P2 and through the freewheeling diode connected in antiparallel with switching element 31p2 and diode 35 connected in antiparallel with resistor element 34 and flows into the positive terminal of power storage element 32. Furthermore, DC short-circuit current SCC flows in a direction from the negative terminal of power storage element 32 through the freewheeling diode connected in antiparallel with switching element 31n1 to the high potential-side input/output terminal P1. As a result, power storage element 32 in full-bridge converter cell 7F (SM1) is continuously charged.

In a case where a sufficient number of full-bridge converter cells 7F are provided on the path of DC short-circuit current SCC, the charge of power storage elements 32 is stopped at a point of time when the composite voltage of power storage elements 32 of converter cells 7F becomes equal to the voltage of DC circuit 14. For example, when half or more of converter cells 7 in each arm circuit 5, 6 are full bridge type, the composite voltage of power storage elements 32 of converter cells 7F can compete with the voltage of DC circuit 14. However, in a case where a sufficient number of full-bridge converter cells 7F are not provided on the path of DC short-circuit current SCC, the voltage charged in power storage element 32 of each individual converter cell 7F exceeds the withstand voltage of power storage element 32. As a result, overvoltage may cause breakdown of power storage element 32.

In order to prevent breakdown of power storage element 32 due to overvoltage as described above, bypass circuit 41 is provided in each arm circuit 5, 6. Specifically, a plurality of converter cells 7 connected in cascade that constitute each arm circuit 5, 6 are divided into one or more adjacent cell blocks (cell blocks may be simply referred to as blocks). Bypass circuit 41 is connected in parallel with each cell block. Here, one or more of a plurality of converter cells 7 that constitute each cell block are full-bridge converter cells 7F.

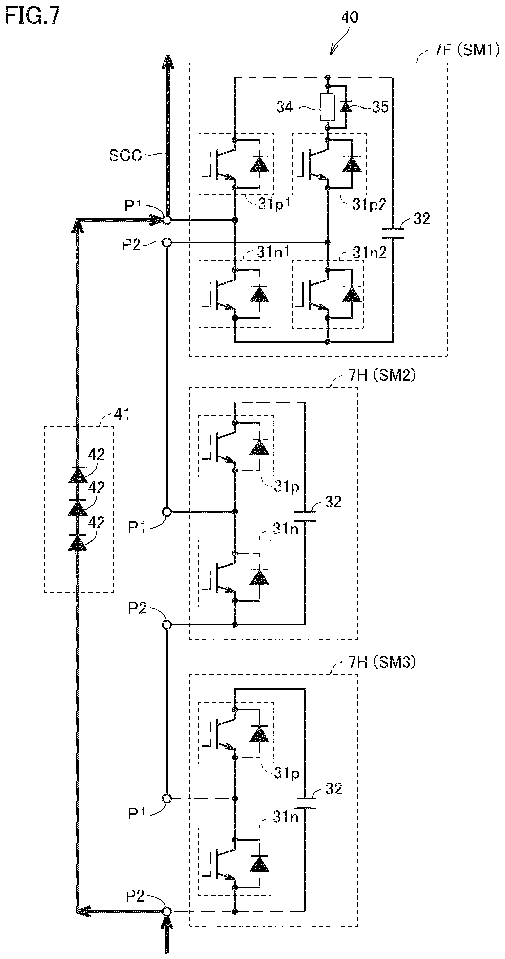

Fig. 7 is a circuit diagram illustrating a path of DC short-circuit current flowing through an arm circuit in a case where a bypass circuit is provided. The circuit diagram in Fig. 7 corresponds to the circuit diagram in Fig. 6. However, the circuit diagram in Fig. 7 differs from the circuit diagram in Fig. 6 in that three converter cells 7 (SM1, SM2, SM3) in Fig. 7 constitute a cell block 40 and bypass circuit 41 is provided in parallel with cell block 40. In Fig. 7, the path of short-circuit current is shown by a thick arrow.

Specifically, bypass circuit 41 is connected between the high potential-side input/output terminal P1 of converter cell 7F (SM1) on the highest potential side in the corresponding cell block 40 and the low potential-side input/output terminal P2 of converter cell 7H (SM3) on the lowest potential side. Bypass circuit 41 is configured to prevent current in a direction from the high potential side to the low potential side. Thus, the operation of power converter 2 is not interrupted when no failure occurs in DC circuit 14. As an example, bypass circuit 41 includes a plurality of diodes 42 connected in series such that the reverse bias direction is the forward direction.

Referring to Fig. 6 and Fig. 7, at the onset of a short-circuit failure of DC circuit 14, DC short-circuit current SCC flows through both of a path through converter cells 7 (SM1, SM2, SM3) as shown in Fig. 6 and a circuit through bypass circuit 41 as shown in Fig. 7. Subsequently, when the charge voltage of power storage element 32 of full-bridge converter cell 7F becomes larger than a voltage drop of bypass circuit 41, DC short-circuit current SCC flows only through bypass circuit 41. In other words, as shown in Fig. 7, DC short-circuit current SCC is completely commutated to bypass circuit 41. As a result, breakdown due to overvoltage of power storage element 32 can be prevented.

In a case where cell block 40 is configured with half-bridge converter cells 7H alone in the foregoing, DC short-circuit current SCC also flows through the freewheeling diode connected in antiparallel with switching element 31n of each converter cell 7H. In other words, DC short-circuit current SCC flows through both bypass circuit 41 and cell block 40. In contrast, DC short-circuit current SCC can flow only through bypass circuit 41 when at least one full-bridge converter cell 7F is included in a plurality of converter cells 7 that constitute each cell block 40 as described above.

[Hardware Configuration Example of Control Device]

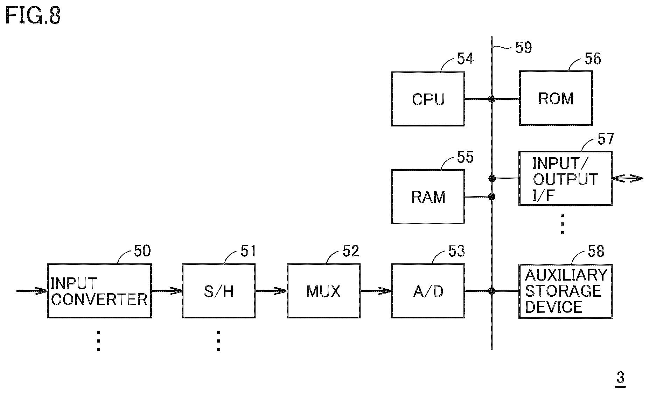

Fig. 8 is a block diagram showing a hardware configuration example of control device 3 shown in Fig. 1. Fig. 8 shows an example in which control device 3 is configured with a computer.

Referring to Fig. 8, control device 3 includes one or more input converters 50, one or more sample hold (S/H) circuits 51, a multiplexer (MUX) 52, and an analog-to-digital (A/D) converter 53. Control device 3 further includes one or more central processing units (CPU) 54, random access memory (RAM) 55, and read only memory (ROM) 56. Control device 3 further includes one or more input/output interfaces 57, an auxiliary storage device 58, and a bus 59 connecting the components above to each other.

Input converter 50 includes an auxiliary transformer (not shown) for each input channel. Each auxiliary transformer converts a detection signal from each electrical quantity detector in Fig. 1 into a signal having a voltage level suitable for subsequent signal processing.

Sample hold circuit 51 is provided for each input converter 50. Sample hold circuit 51 samples and holds a signal representing the electrical quantity received from the corresponding input converter 50 at a predetermined sampling frequency.

Multiplexer 52 successively selects the signals held by a plurality of sample hold circuits 51. A/D converter 53 converts a signal selected by multiplexer 52 into a digital value. A plurality of A/D converters 53 may be provided to perform A/D conversion of detection signals of a plurality of input channels in parallel.

CPU 54 controls the entire control device 3 and performs computational processing under instructions of a program. RAM 55 as a volatile memory and ROM 56 as a nonvolatile memory are used as a main memory of CPU 54. ROM 56 stores a program and setting values for signal processing. Auxiliary storage device 58 is a nonvolatile memory having a larger capacity than ROM 56 and stores a program and data such as electrical quantity detection values.

Input/output interface 57 is an interface circuit for communication between CPU 54 and an external device.

Unlike the example in Fig. 8, at least a part of control device 3 may be configured using circuitry such as a field programmable gate array (FPGA) and an application specific integrated circuit (ASIC). That is, the function of each functional block illustrated in Fig. 8 may be configured based on the computer illustrated in Fig. 8 or may be at least partially configured with circuitry such as an FPGA and an ASIC. At least a part of the function of each functional block may be configured with an analog circuit.

[Functional Configuration Example of Control Device]

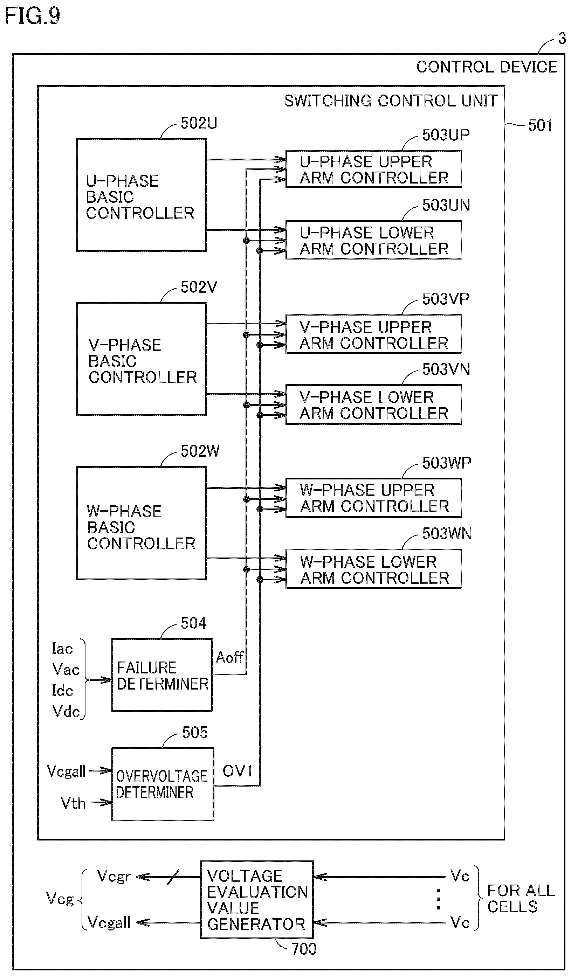

Fig. 9 is a block diagram illustrating a functional configuration example of control device 3 shown in Fig. 1. Referring to Fig. 9, control device 3 includes a switching control unit 501 and a voltage evaluation value generator 700.

Switching control unit 501 controls on and off of switching elements 31p and 31n of each half-bridge converter cell 7H as well as on and off of switching elements 31p1, 31n1, 31p2, and 31n2 of each full-bridge converter cell 7F.

Specifically, switching control unit 501 includes a U-phase basic controller 502U, a U-phase upper arm controller 503UP, a U-phase lower arm controller 503UN, a V-phase basic controller 502V, a V-phase upper arm controller 503VP, a V-phase lower arm controller 503VN, a W-phase basic controller 502W, a W-phase upper arm controller 503WP, a W-phase lower arm controller 503WN, a failure determiner 504, and an overvoltage determiner 505.

In the following description, U-phase basic controller 502U, V-phase basic controller 502V, and W-phase basic controller 502W may be collectively referred to as basic controller 502. Similarly, U-phase upper arm controller 503UP, U-phase lower arm controller 503UN, V-phase upper arm controller 503VP, V-phase lower arm controller 503VN, W-phase upper arm controller 503WP, and W-phase lower arm controller 503WN may be collectively referred to as arm controller 503.

Failure determiner 504 determines a failure of AC circuit 12, based on at least one of AC current Iac of each phase or AC voltage Vac of each phase. For example, when AC current Iac is overcurrent or when AC voltage Vac is overvoltage, failure determiner 504 determines that AC circuit 12 is failed. Furthermore, failure determiner 504 determines a failure of DC circuit 14, based on at least one of DC current Idc or DC voltage Vdc. For example, when DC current Idc is overcurrent or when DC voltage Vdc is overvoltage, failure determiner 504 determines that DC circuit 14 is failed.

Failure determiner 504 outputs an all-off command signal Aoff to each arm controller 503 to turn off all switching elements 31 of each converter cell 7 that constitutes power converter 2. Failure determiner 504 activates all-off command signal Aoff when it is determined at least one of AC circuit 12 or DC circuit 14 is failed.

Overvoltage determiner 505 determines whether an evaluation value representing the degree of magnitude of capacitor voltage Vc in the converter cells as a whole included in power converter 2 exceeds a threshold Vth1. For example, overvoltage determiner 505 compares an all voltage evaluation value Vcgall that is a mean value of capacitor voltages Vc of all converter cells 7 of power converter 2 with threshold Vth1. If all voltage evaluation value Vcgall exceeds threshold Vth, overvoltage determiner 505 determines that the voltage of power storage element 32 of each converter cell 7 is overvoltage in power converter 2 as a whole. Instead of all voltage evaluation value Vcgall, a mean value of a predetermined number of converter cells 7 may be compared with a threshold, or a median of capacitor voltages Vc of all converter cells 7 of power converter 2 may be compared with a threshold. There may be various evaluation values for determining whether capacitor voltage Vc of each converter cell 7 rises in the power converter as a whole.

Overvoltage determiner 505 outputs an overvoltage determination signal OV1 representing an overvoltage determination result to each arm controller 503. If it is determined that voltage of power storage element 32 of each converter cell 7 is overvoltage in power converter 2 as a whole, overvoltage determiner 505 activates overvoltage determination signal OV1. Overvoltage determination signal OV1 is used for controlling on and off of the switching element connected in series with resistor element 34 in full-bridge converter cell 7F.

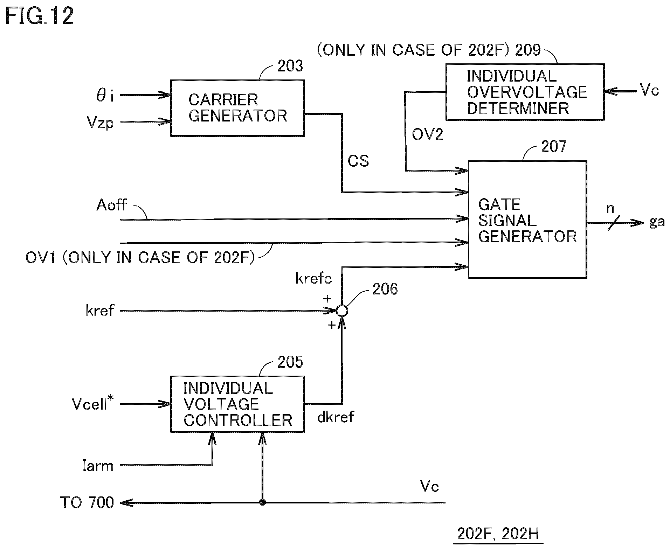

In connection with the foregoing, as described later with reference to Fig. 12, an individual cell controller 202F corresponding individually to full-bridge converter cell 7F has an individual overvoltage determiner 209. If capacitor voltage Vc of the corresponding full-bridge converter cell 7F exceeds a threshold Vth2 (which is different from Vth1), individual overvoltage determiner 209 determines that power storage element 32 of this full-bridge converter cell 7F has overvoltage, and activates an overvoltage determination signal OV2.

A significant voltage rise of power storage element 32 of a single converter cell 7, which is not limited to full bridge type, is attributable to a failure of the single converter cell 7 and therefore may be handled by turning on a bypass switch (not shown in Fig. 2 to Fig. 4) provided for each converter cell 7.

Voltage evaluation value generator 700 receives capacitor voltage Vc detected by voltage detector 33 in each converter cell 7. Voltage evaluation value generator 700 generates, from capacitor voltage Vc of each converter cell 7, an all voltage evaluation value Vcgall for evaluating the total sum of stored energy of capacitors 32 of all converter cells 7 in power converter 2 and a group voltage evaluation value Vcgr indicating the total sum of stored energy of capacitors 32 of converter cells 7 in each of predetermined groups.

For example, group voltage evaluation value Vcgr includes a U-phase voltage evaluation value Vcgu, a V-phase voltage evaluation value Vcgv, and a V-phase voltage evaluation value Vcgv for evaluating the total sum of stored energy of a plurality of (2xNecll) converter cells 7 included in each of leg circuits 4u (U phase), 4v (V phase), and 4w (W phase). Alternatively, instead of or in addition to the voltage evaluation value for each leg circuit 4 (U phase, V phase, W phase), group voltage evaluation value Vcgr may include group voltage evaluation value Vcgr for evaluating the total sum of stored energy of a plurality of (Necll) converter cells 7 included in each arm circuit, for each of upper arm circuit 5 and lower arm circuit 6 for each leg circuit 4. In the present embodiment, all voltage evaluation value Vcgall and group voltage evaluation value Vcgr generated by voltage evaluation value generator 700 are collectively referred to as voltage evaluation value Vcg.

These voltage evaluation values Vcg are determined as the mean value of capacitor voltages Vc of all converter cells 7 in power converter 2 or the mean value of capacitor voltages Vc of a plurality of converter cells 7 belonging to each group (each phase leg circuit or each arm circuit).

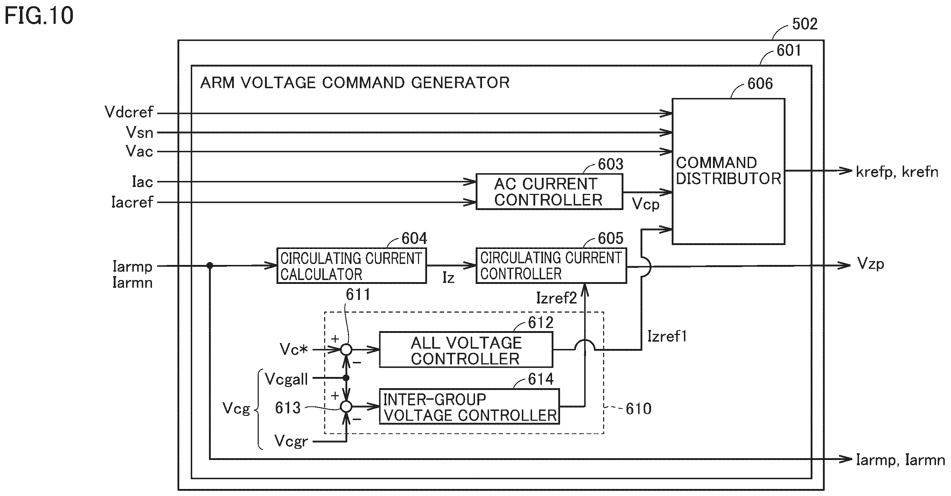

Fig. 10 is a block diagram illustrating a configuration example of basic controller 502 shown in Fig. 9. Referring to Fig. 10, basic controller 502 includes an arm voltage command generator 601.

Arm voltage command generator 601 calculates an arm voltage command value krefp for the upper arm circuit and an arm voltage command value krefn for the lower arm circuit. In the following description, krefp and krefn are collectively referred to as kref.

Arm voltage command generator 601 includes an AC current controller 603, a circulating current calculator 604, a circulating current controller 605, a command distributor 606, and a voltage macro controller 610.

AC current controller 603 calculates an AC control command value Vcp such that the deviation between the detected AC current Iac and the set AC current command value Iacref becomes zero.

Circulating current calculator 604 calculates circulating current Iz flowing through one leg circuit 4, based on arm current Iarmp of the upper arm circuit and arm current Iarmn of the lower arm circuit. Circulating current is current circulating between a plurality of leg circuits 4. For example, circulating current Iz flowing through one leg circuit 4 can be calculated by the following equations (1) and (2).

$$Idc=(Ipu+Ipv+Ipw+Inu+Inv+Inw)/2 \qquad (1)$$

$$Iz=(Iarmp+Iarmn)/2-Idc/3 \qquad (2)$$

Voltage macro controller 610 generates a circulating current command value Izref so as to compensate for deficiency and excess of stored energy in all of converter cells 7 in power converter 2 and imbalance of stored energy between groups (between leg circuits of each phase or between arm circuits), based on voltage evaluation value Vcg generated by voltage evaluation value generator 700.

For example, voltage macro controller 610 includes subtractors 611 and 613, an all voltage controller 612, and an inter-group voltage controller 614.

Subtractor 611 subtracts all voltage evaluation value Vcgall generated by voltage evaluation value generator 700 from all voltage command value Vc*. All voltage command value Vc* is a reference value of capacitor voltage Vc corresponding to a reference value of stored energy in capacitor 32 in each converter cell 7. All voltage controller 612 performs computation on the deviation of all voltage evaluation value Vcgall from all voltage command value Vc* calculated by subtractor 611 to generate a first current command value Izref1. First current command value Izref1 corresponds to a circulating current value for eliminating deficiency and excess of stored energy in all of converter cells 7 in power converter 2 by controlling the entire level of capacitor voltages Vc of converter cells 7 to all voltage command value Vc*.

Similarly, subtractor 613 subtracts group voltage evaluation value Vcgr from all voltage evaluation value Vcgall. For example, when basic controller 502 is U-phase basic controller 502, U-phase voltage evaluation value Vcgu is input as group voltage evaluation value Vcgr to subtractor 613. Inter-group voltage controller 614 performs computation on the deviation of group voltage evaluation value Vcgr (U-phase voltage evaluation value Vcgu) from all voltage evaluation value Vcgall calculated by subtractor 613 to generate a second current command value Izref2. Second current command value Izref2 corresponds to a circulating current value for eliminating imbalance of stored energy in converter cells 7 between groups by equalizing the level of capacitor voltages Vc of converter cells 7 between groups (here, between leg circuits of individual phases).

For example, all voltage controller 612 and inter-group voltage controller 614 may be configured as PI controllers that perform proportional computation and integral computation for the deviation calculated by subtractors 611 and 613 or may be configured as a PID controller that additionally performs differential computation. Alternatively, all voltage controller 612 and inter-group voltage controller 614 may be configured using a configuration of another controller commonly used in feedback control.

All voltage controller 612 inputs the generated first current command value Izref1 to command distributor 606. Inter-group voltage controller 614 inputs the generated second current command value Izref2 as a circulating current command value to circulating current controller 605.

Circulating current controller 605 calculates a circulation control command value Vzp for performing control such that circulating current Iz calculated by circulating current calculator 604 follows second current command value Izref2 set by inter-group voltage controller 614 as a circulating current command value. Circulating current controller 605 can also be configured with a controller that performs PI control or PID control for a deviation of circulating current Iz from circulating current command value Izref2. That is, voltage macro controller 610 using voltage evaluation value Vcg forms a minor loop to control circulating current to suppress deficiency and excess of stored energy in all of converter cells 7 or a plurality of converter cells 7 in each group.

In the example shown in Fig. 10, circulating current controller 605 outputs circulation control command value Vzp directly to individual cell controller 202 of arm controller 503 in order to increase the controllability of circulating current. Instead, circulation control command value Vzp may be added to other command values that constitute arm voltage command values krefp and krefn in command distributor 606, so that only arm voltage command values krefp and krefn can be output to individual cell controller 202 of arm controller 503. However, the controllability of circulating current is decreased because the magnitude of circulation control command value Vzp is small compared with the magnitude of the other command values.

Command distributor 606 receives AC control command value Vcp, first current command Izref1, DC voltage command value Vdcref, neutral point voltage Vsn, and AC voltage Vac. Since the AC side of power converter 2 is connected to AC circuit 12 through transformer 13, neutral point voltage Vsn can be determined from the voltage of DC power source of DC circuit 14. DC voltage command value Vdcref may be given by DC output control or may be a constant value.

Command distributor 606 calculates voltage shares output by the upper arm circuit and the lower arm circuit, based on these inputs. Command distributor 606 determines arm voltage command value krefp of the upper arm circuit and arm voltage command value krefn of the lower arm circuit by subtracting a voltage drop due to an inductance component in the upper arm circuit or the lower arm circuit from the calculated voltage.

The determined arm voltage command value krefp of the upper arm circuit and arm voltage command value krefn of the lower arm circuit serve as output voltage commands to allow AC current Iac to follow AC current command value Iacref, allow the entire level of capacitor voltage Vc to all voltage command value Vc*, allow DC voltage Vdc to follow DC voltage command value Vdcref, and perform feed forward control of AC voltage Vac.

Basic controller 502 outputs arm current Iarmp of the upper arm circuit, arm current Iarmn of the lower arm circuit, arm voltage command value krefp of the upper arm circuit, and arm voltage command value krefn of the lower arm circuit.

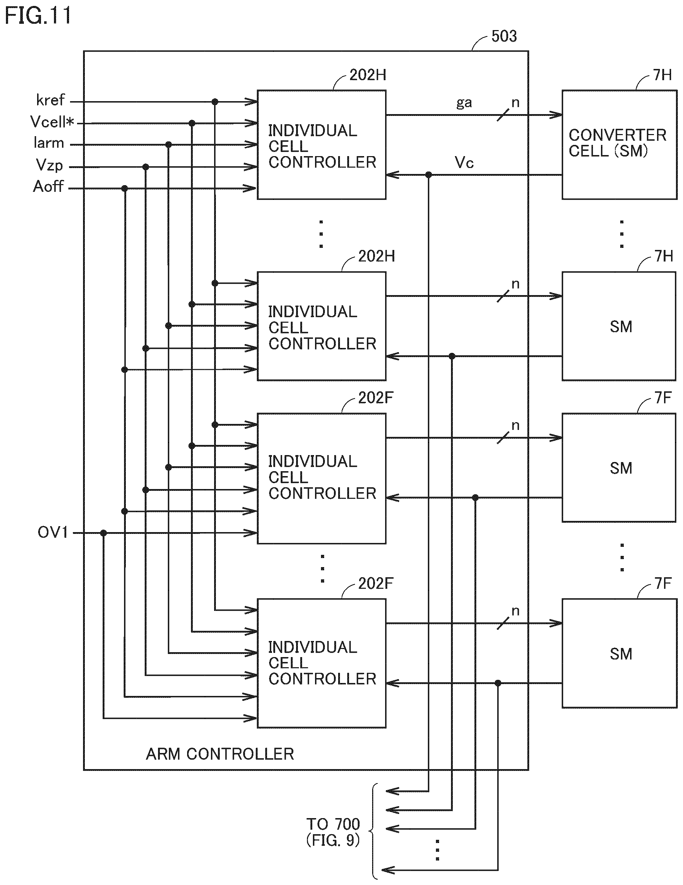

Fig. 11 is a block diagram illustrating a configuration example of arm controller 503. Referring to Fig. 11, arm controller 503 includes individual cell controllers 202H that each individually control the corresponding half-bridge converter cell 7H, and individual cell controllers 202F that each individually control the corresponding full-bridge converter cell 7F. Arm controller 503 thus includes, in total, Ncell individual cell controllers 202 (202H, 202F) as many as the number of converter cells 7.

Individual cell controller 202H that controls half-bridge converter cell 7H receives arm voltage command value kref, arm current Iarm, circulation control command value Vzp, and capacitor voltage command value Vcell* from basic controller 502 and all-off command signal Aoff from failure determiner 504. Individual cell controller 202F that controls full-bridge converter cell 7F further receives overvoltage determination signal OV1 from overvoltage determiner 505, in addition the values above.

Each individual cell controller 202 (202H, 202F) generates a gate signal ga for the corresponding converter cell 7 (7H, 7F) and outputs the generated gate signal ga to the corresponding converter cell 7 (7H, 7F). Specifically, in the case of half-bridge converter cell 7H shown in Fig. 2, gate signal ga is a signal that controls on/off of switching elements 31p and 31n (n=2). In the case of full-bridge converter cell 7F shown in Fig. 3 and Fig. 4, gate signal ga is a signal that controls on/off of each of switching elements 31p1, 31n1, 31p2, and 31n2 (n=4).

On the other hand, the detection value (capacitor voltage Vc) from voltage detector 33 in each converter cell 7 (7H, 7F) is sent to voltage evaluation value generator 700 shown in Fig. 9.

Unlike the case in Fig. 11, each individual cell controller 202 may be provided inside the corresponding converter cell 7. In this case, arm voltage command value kref, capacitor voltage command value Vcell*, the detection value of arm current Iarm, circulation control command value Vzp, and all-off command signal Aoff are transmitted from a higher level control system including basic controller 502 of each phase, failure determiner 504, and overvoltage determiner 505 to each converter cell 7. Overvoltage determination signal OV1 is further transmitted from the higher level control system to each full-bridge converter cell 7F. For example, optical fiber communication is used in signal transmission between the higher level control system and each individual cell controller 202.

Fig. 12 is a block diagram illustrating a configuration example of individual cell controller 202 (202F, 202H) shown in Fig. 11. In Fig. 12, a switching element for output voltage control in each converter cell 7 is controlled in accordance with phase shift pulse width modulation (PWM).

Referring to Fig. 12, each of individual cell controllers 202F and 202H includes a carrier generator 203, an individual voltage controller 205, an adder 206, and a gate signal generator 207. Individual cell controller 202F corresponding to full-bridge converter cell 7F further includes individual overvoltage determiner 209. Among these components, there is no functional difference in carrier generator 203, individual voltage controller 205, and adder 206 between individual cell controllers 202F and 202H. On the other hand, the function of gate signal generator 207 differs between individual cell controllers 202F and 202H. In the following description, gate signal generator 207 for individual cell controller 202H and gate signal generator 207 for 202F will be described separately.

First, carrier generator 203 generates a carrier signal CS having a predetermined carrier frequency fc, phase $\theta i$, and amplitude Amp for use in phase shift pulse width modulation (PWM) control. Carrier signal CS is typically a triangular wave.

The phase shift PWM control shifts the timings (that is, phases $\theta i$) of PWM signals from each other to be output to a plurality of (Ncell) converter cells 7 that constitute the same arm circuit (upper arm circuit 5 or lower arm circuit 6). It is known that this can reduce harmonic components included in a composite voltage of output voltages of converter cells 7.

Furthermore, carrier generator 203 modulates the generated carrier signal CS in accordance with circulation control command value Vzp. As a result, a PWM signal (that is, gate signal ga) generated in gate signal generator 207 has a pulse width changing in accordance with circulation control command value Vzp. Thus, a deviation of circulating current Iz from circulating current command value Izref is controlled to be reduced. In this way, carrier signal CS is controlled by circulation control command value Vzp independently of voltage target values krefp and krefn of each phase, whereby the controllability of circulating current can be improved.

Examples of a specific method of modulating carrier signal CS by circulation control command value Vzp include baseline modulation in which a baseline of carrier signal CS is changed in accordance with circulation control command value Vzp, and frequency modulation in which the frequency of carrier signal CS is changed in accordance with circulation control command value Vzp. The method is not limited thereto, and any modulation method may be employed as long as the pulse width of gate signal ga finally generated changes in accordance with circulation control command value Vzp (for example, the larger circulation control command value Vzp, the wider the pulse width of gate signal ga). Alternatively, the pulse width of gate signal ga generated in gate signal generator 207 may be directly changed in accordance with circulation control command value Vzp, without modulating carrier signal CS.

Individual voltage controller 205 receives voltage command value Vcell*, capacitor voltage Vc of the corresponding converter cell 7, and arm current Iarm of the arm circuit to which the corresponding converter cell 7 belongs. Voltage command value Vcell* can be set to a value (fixed value) common to voltage command value Vc* of all voltage controller 612 in Fig. 10. Alternatively, in order to equalize capacitor voltage Vc in the same arm circuit, voltage command value Vcell* may be set to the mean value of capacitor voltages of Ncell converter cells 7 included in the same arm circuit. Individual voltage controller 205 calculates a control output dkref for charging/discharging capacitor 32 in a direction that eliminates a deviation of capacitor voltage Vc from voltage command value Vcell*.

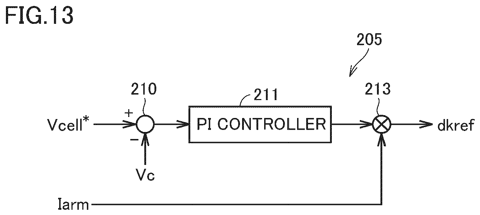

Referring to Fig. 13, individual voltage controller 205 will now be described in more detail. Fig. 13 is a block diagram showing a configuration example of the individual voltage controller in detail. Referring to Fig. 13, individual voltage controller 205 includes a subtractor 210, a PI controller 211, and a multiplier 213.

Subtractor 210 calculates a deviation of capacitor voltage Vc from voltage command value Vcell*. PI controller 211 performs proportional computation and integral computation for the deviation calculated by subtractor 210. Instead of PI controller 211, a PID controller that further performs differential computation or a feedback controller having another configuration may be used.

Multiplier 213 multiplies the computation result of PI controller 211 by arm current Iarm to generate control output dkref of individual voltage controller 205. Multiplier 213 may multiply the computation result of PI controller 211 by the sign "+1" or "-1" corresponding to the polarity of arm current Iarm, instead of arm current Iarm. This multiplication results in control output dkref for charging and discharging capacitor 32 in a direction that eliminates the deviation.

Referring to Fig. 12 again, adder 206 adds arm voltage command value kref from basic controller 502 and control output dkref of individual voltage controller 205 to output a cell voltage command value krefc.

Individual overvoltage determiner 209 is provided in individual cell controller 202F corresponding to full-bridge converter cell 7F. When capacitor voltage Vc output from the corresponding full-bridge converter cell 7F exceeds threshold Vth2, individual overvoltage determiner 209 determines that power storage element 32 of the corresponding full-bridge converter cell 7F has overvoltage. In this case, individual overvoltage determiner 209 activates overvoltage determination signal OV2 to be output.

Gate signal generator 207 generates ga (n=2, n=4) for controlling on/off of switching element 31 of the corresponding converter cell 7. The case of individual cell controller 202H (n=2) corresponding to half-bridge converter cell 7H will be first described. In this case, gate signal generator 207 receives carrier signal CS, cell voltage command value krefc, and all-off command signal Aoff, but does not receive overvoltage determination signals OV1 and OV2.

When all-off command signal Aoff is activated, that is, when failure determiner 504 determines that AC circuit 12 or DC circuit 14 is failed, gate signal generator 207 generates gate signal ga for performing control to turn off all switching elements 31p and 31n of the corresponding half-bridge converter cell 7H (n=2). All-off command signal Aoff has priority over cell voltage command value krefc.

On the other hand, when all-off command signal Aoff is not activated, gate signal generator 207 generates gate signal ga for controlling on/off of switching elements 31p and 31n by modulating cell voltage command value krefc using carrier signal CS (n=2).

Specifically, when the voltage of cell voltage command value krefc is higher than the voltage of carrier signal CS, the PWM signal is set to high level (H level). Conversely, when the voltage of carrier signal CS is higher than the voltage of cell voltage command value krefc, the PWM signal is set to low level (L level).

For example, in the H level period of the PWM signal, gate signal ga (n=2) is generated such that switching element 31p turns on and switching element 31n turns off in converter cell 7H in Fig. 2. Conversely, in the L level period of the PWM signal, gate signal ga (n=2) is generated such that switching element 31n turns on and switching element 31p turns off.

The case of individual cell controller 202F corresponding to full-bridge converter cell 7F will now be described. Hereinafter the control of converter cell 7F having resistor element 34 in third arm 39C as shown in (A) in Fig. 3 and Fig. 4 will be described as an example. The case in which resistor element 34 is provided in second arm 39B as shown in (B) in Fig. 3 is supplementarily described by giving a reference sign in parentheses.

As shown in Fig. 12, individual cell controller 202F receives carrier signal CS, cell voltage command value krefc, all-off command signal Aoff, and overvoltage determination signals OV1 and OV2. When all-off command signal Aoff is activated, gate signal generator 207 controls all switching elements 31p1, 31n1, 31p2, and 31n2 of the corresponding full-bridge converter cell 7F to an off state.

Next, when both of all-off command signal Aoff and at least one of overvoltage determination signal OV1 or OV2 are activated, switching element 31p2 (31n1) of arm 39C (39B) having a resistor element is brought to an on state, and switching elements 31n2, 31p1, and 31n1 (31p1, 31p2, and 31n2) of the other arms 39D, 39A, and 39B (39A, 39C, and 39D) are brought to an off state. As a result, a current path through arms 39A and 39C (39B and 39D) is produced between input/output terminals P1 and P2, in parallel with a current path through arm 39A, power storage element 32, and arm 39D, so that the voltage of power storage element 32 can be consumed by resistor element 34 of arm 39C (39B).

On the other hand, when all-off command signal Aoff is not activated, the on/off of each switching element 31 is controlled as follows. First, the on/off of switching element 31p2 (31n1) of arm 39C (39B) having resistor element 34, among four arms 39A to 39D that constitute full-bridge converter cell 7F, is controlled based on overvoltage determination signals OV1 and OV2. Specifically, when neither overvoltage determination signal OV1 nor OV2 is activated, gate signal generator 207 generates gate signal ga to turn normally off switching element 31p2 (31n1) and supplies the generated gate signal ga to switching element 31p2 (31n1). When at least one of overvoltage determination signal OV1 or OV2 is activated, gate signal generator 207 generates gate signal ga to intermittently turn on/off switching element 31p2 (31n1) and supplies the generated gate signal ga to switching element 31p2 (31n1). Thus, the voltage of power storage element 32 is consumed by resistor element 34, thereby eliminating the overvoltage state of power storage element 32.

The number of times of on/off, the on time, and the off time of switching element 31p2 (31n1) of arm 39C (39B) having resistor element 34 are determined based on the amount of heat generation of resistor element 34, the cooling ability of resistor element 34, and a temperature rise of resistor element 34. As a specific example, the number of times of on/off, the on time, and the off time of switching element 31p2 (31n1) may be determined based on an estimated value or a measured value of temperature of resistor element 34.

Further, the capacity of power storage element 32 provided in full-bridge converter cell 7F may be made smaller than the capacity of power storage element 32 provided in half-bridge converter cell 7H. Thus, a voltage rise of power storage element 32 provided in full-bridge converter cell 7F can be made larger than a voltage rise of power storage element 32 provided in half-bridge converter cell 7H, so that energy can be absorbed by resistor element 34 at earlier timing.

Switching element 31n2 (31p1) provided in arm 39D (39A) adjacent to the above arm 39C (39B) through a node directly connected to input/output terminal P1 or P2 is controlled to normally on. Gate signal generator 207 generates gate signal ga to turn normally on switching element 31n2 (31p1) and supplies the generated gate signal ga to switching element 31n2.

For switching element 31p1 (31n2) provided in arm 39A (39D) adjacent to arm 39C (39B) through high potential-side node 36p (low potential-side node 36n) and switching element 31n1 (31p2) provided in the other arm 39B (39C), in a case of phase shift PWM control method, gate signal generator 207 generates gate signal ga for controlling the on/off of these switching elements 31p1 and 31n1 (31n2 and 31p2) by modulating cell voltage command value krefc using carrier signal CS.

Specifically, in a case of phase shift PWM control method, when the voltage of cell voltage command value krefc is higher than the voltage of carrier signal CS, the PWM signal is set to high level (H level). Conversely, when the voltage of carrier signal CS is higher than the voltage of cell voltage command value krefc, the PWM signal is set to low level (L level).

For example, in the H level period of the PWM signal, gate signal ga is generated so that switching element 31p1 (31n2) provided in arm 39A (39D) turns on and switching element 31n1 (31p2) provided in arm 39B (39C) turns off. Conversely, in the L level period of the PWM signal, gate signal ga is generated so that switching element 31n1 (31p2) provided in arm 39B (39C) turns on and switching element 31p1 (31n2) provided in arm 39A (39D) turns off.

A method different from the phase shift PWM control is, for example, a method that generates a pulse signal with a fundamental frequency (that is, a signal having one pulse in a half cycle) for each converter cell. In this method, the pulse rising and falling timings are varied for each converter cell in the same arm circuit, whereby a voltage waveform close to a sinusoidal wave in accordance with a voltage command value is realized in the arm circuit as a whole. Here, the order of pulse outputs is determined in the order of magnitude of voltage of the power storage elements. Thus, as the magnitude of voltage of the power storage element is smaller, the charge time is increased, so that the discharge time can be reduced. As a result, the capacitor voltage can be equalized for each arm circuit. More specifically, the voltages of the power storage elements in the same arm are sorted by magnitude, and the on/off of the switching elements of each converter cell is controlled, considering the number of times of on/off, and the like, based on a principle that voltage output is turned off in order from the converter cell having a power storage element with the largest voltage, and voltage output is turned on in order from the converter cell having a power storage element with the smallest voltage. Individual cell controllers 202H and 202F may control the output voltage of the corresponding converter cell 7 by the method described above instead of the phase shift PWM control.

[Control Procedure for Converter Cell]

The control procedure for switching element 31 provided in converter cell 7 described above will now be summarized.

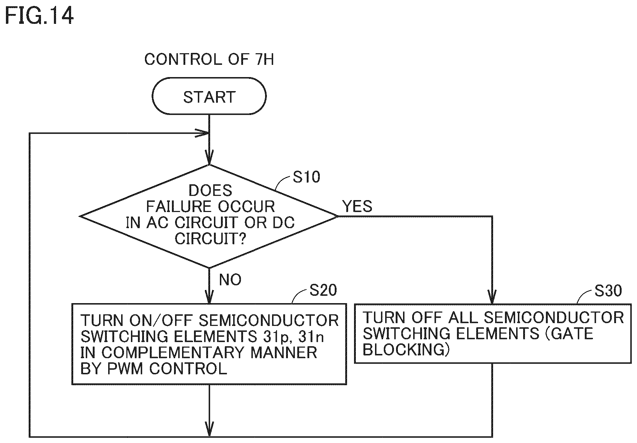

Fig. 14 is a flowchart showing a control procedure for half-bridge converter cell 7H. In step S10 in Fig. 14, failure determiner 504 provided in switching control unit 501 of control device 3 determines whether a failure occurs in AC circuit 12, based on at least one of AC current Iac or AC voltage Vac. Furthermore, failure determiner 504 determines whether a failure occurs in DC circuit 14, based on at least one of DC current Idc or DC voltage Vdc.

If failure determiner 504 determines that a failure occurs in AC circuit 12 or DC circuit 14 (YES in step S10), the process proceeds to step S30. In step S30, failure determiner 504 activates all-off command signal Aoff to be transmitted to each individual cell controller 202, in order to control semiconductor switching elements 31p and 31n of all half-bridge converter cells 7H that constitute power converter 2 to an off state (that is, gate blocking).

On the other hand, if failure determiner 504 determines that a failure does not occur in either of AC circuit 12 and DC circuit 14 (NO in step S10), the process proceeds to step S20. In step S20, individual cell controller 202 corresponding to each half-bridge converter cell 7H controls switching elements 31p and 31n of the corresponding converter cell 7H by pulse width modulation or the like to repeatedly turn on/off in a complementary manner. Subsequently, the above steps S10 to S30 are repeated.

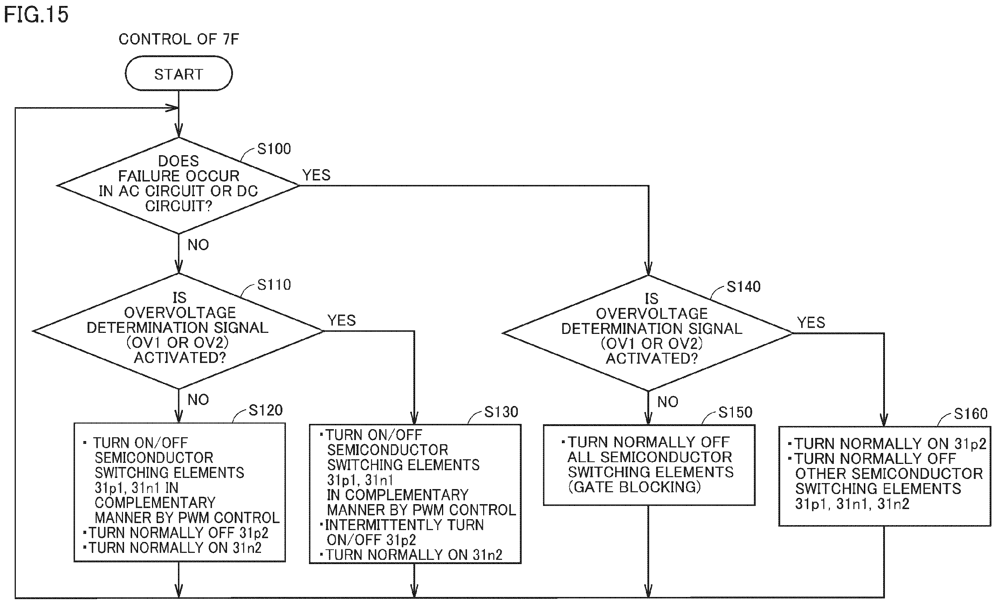

Fig. 15 is a flowchart showing a control procedure for full-bridge converter cell 7F. Hereinafter the case of converter cell 7F having resistor element 34 in third arm 39C as shown in (A) in Fig. 3 and Fig. 4 will be described as an example.

In step S100 in Fig. 15, failure determiner 504 provided in switching control unit 501 of control device 3 determines whether a failure occurs in AC circuit 12, based on at least one of AC current Iac or AC voltage Vac. Furthermore, failure determiner 504 determines whether a failure occurs in DC circuit 14, based on at least one of DC current Idc or DC voltage Vdc.

Further, in steps S110 and S140 in Fig. 15, overvoltage determiner 505 provided in switching control unit 501 of control device 3 determines whether the evaluation value representing the degree of magnitude of capacitor voltage Vc in converter cells 7 as a whole included in power converter 2 exceeds threshold Vth1. If the evaluation value exceeds threshold Vth1, overvoltage determiner 505 activates overvoltage determination signal OV1. Furthermore, individual overvoltage determiner 209 provided in individual cell controller 202F determines whether capacitor voltage Vc of the corresponding full-bridge converter cell 7F exceeds threshold Vth2. If the corresponding capacitor voltage Vc exceeds threshold Vth2, individual overvoltage determiner 209 activates overvoltage determination signal OV2.

In accordance with the determination results in steps S100, S110, and S140, control device 3 controls full-bridge converter cell 7F in any of a first operation mode (S120), a second operation mode (S130), a third operation mode (S150), and a fourth operation mode (S160).

Specifically, if a failure does not occur in either of AC circuit 12 and DC circuit 14 (NO in step S100), and the voltage of power storage element 32 is not in an overvoltage state, that is, if both overvoltage determination signals OV1 and OV2 are in an inactive state (NO in step S110), control device 3 proceeds to step S120 (first operation mode).

In step S120 (first operation mode), individual cell controller 202F corresponding to each full-bridge converter cell 7F controls switching element 31p2 in arm 39C having resistor element 34, among four arms 39A to 39D that constitute a full bridge, to normally off. Individual cell controller 202F controls switching element 31n2 provided in arm 39D adjacent to arm 39C through middle point 38 connected to input/output terminal P2 to normally on. Individual cell controller 202F controls 31p1 and 31n1 provided in the remaining arm 39A and arm 39B by the pulse width modulation method or the like to repeatedly turn on/off in a complementary manner.

Next, if a failure does not occur in either of AC circuit 12 and DC circuit 14 (NO in step S100), but the voltage of power storage element 32 is in an overvoltage state, that is, if overvoltage determination signal OV1 or OV2 is in an active state (YES in step S110), control device 3 proceeds to step S130 (second operation mode).

In step S130 (second operation mode), individual cell controller 202F corresponding to each full-bridge converter cell 7F intermittently turns on/off switching element 31p2 in arm 39C having resistor element 34. Here, if the evaluation value representing the voltage of power storage elements 32 in the entire power converter exceeds threshold Vth1 and indicates an overvoltage state as a whole (that is, if overvoltage determination signal OV1 is in an active state), switching elements 31p2 of arms 39C in all full-bridge converter cells 7F are intermittently turned on/off. On the other hand, if the voltage of a certain power storage element 32 exceeds threshold Vth2 and is in an overvoltage state (that is, if overvoltage determination signal OV2 is in an active state), switching element 31p2 in arm 39C of the converter cell 7F in an overvoltage state is intermittently turned on/off, whereas switching element 31p2 in arm 39C of converter cell 7F that is not in an overvoltage state is controlled to an off state. The control of switching elements 31n2, 31p1, and 31n1 provided in the other arms 39D, 39A, and 39B is similar to the case in step S120 (first operation mode) and will not be further elaborated.

Next, if it is determined that a failure occurs in AC circuit 12 or DC circuit 14 (YES in step S100), but the voltage of power storage element 32 is not in an overvoltage state, that is, if both of overvoltage determination signals OV1 and OV2 are in an inactive state (NO in step S140), control device 3 proceeds to step S150 (third operation mode).

In step S150 (third operation mode), control device 3 controls all semiconductor switching elements 31 that constitute power converter 2 to an off state (that is, gate blocking).

Next, if it is determined that a failure occurs in AC circuit 12 or DC circuit 14 (YES in step S100), and the voltage of power storage element 32 is in an overvoltage state, that is, if overvoltage determination signal OV1 or OV2 is in an active state (YES in step S140), control device 3 proceeds to step S160 (fourth operation mode).

In step S160 (fourth operation mode), individual cell controller 202F corresponding to each full-bridge converter cell 7F controls switching element 31p2 in arm 39C having resistor element 34 to an on state. Here, if the evaluation value representing the voltage of power storage elements 32 in the entire power converter 2 exceeds threshold Vth1 and indicates an overvoltage state as a whole (that is, if overvoltage determination signal OV1 is in an active state), switching elements 31p2 of arms 39C in all full-bridge converter cells 7F are controlled to an on state. On the other hand, if the voltage of a certain power storage element 32 exceeds threshold Vth2 and is in an overvoltage state (that is, if overvoltage determination signal OV2 is in an active state), switching element 31p2 in arm 39C of the converter cell 7F in an overvoltage state is controlled to an on state, whereas switching element 31p2 in arm 39C of converter cell 7F that is not in an overvoltage state is controlled to an off state. Switching elements 31n2, 31p1, and 31n1 provided in the other arms 39D, 39A, and 39B are controlled to an off state.

Subsequently, the above steps S100 to S160 are repeated. For example, when control device 3 is controlling each full-bridge converter cell 7F included in power converter 2 in the first operation mode (step S120), if the evaluation value representing the degree of magnitude of voltage of power storage elements 32 in the converter cells as a whole included in power converter 2 exceeds the first threshold Vth1, control device 3 controls each full-bridge converter cell 7F included in power converter 2 in the second operation mode (step S130).

For example, when control device 3 is controlling each full-bridge converter cell 7F included in power converter 2 in the first operation mode (step S120), if the voltage value of power storage element 32 in any one of full-bridge converter cells 7F included in power converter 2 exceeds the second threshold Vth2, control device 3 controls this converter cell 7F in the second operation mode (step S130). However, as for full-bridge converter cell 7F in which the voltage value of power storage element 32 does not exceed the second threshold Vth2, control device 3 controls this converter cell 7F in the first operation mode (step S120).

Further, when control device 3 is controlling each full-bridge converter cell 7F included in power converter 2 in the first operation mode (step S120), if a failure occurs in DC circuit 14 or AC circuit 12, control device 3 controls each full-bridge converter cell 7F included in power converter 2 in the third operation mode (step S150).

Further, when control device 3 is controlling each full-bridge converter cell 7F included in power converter 2 in the third operation mode (step S150), if the evaluation value representing the degree of magnitude of voltage of power storage elements 32 in the converter cells as a whole included in power converter 2 exceeds the first threshold Vth1, control device 3 controls each full-bridge converter cell 7F included in power converter 2 in the fourth operation mode (step S160).

Further, when control device 3 is controlling each full-bridge converter cell 7F included in power converter 2 in the third operation mode (step S150), if the voltage value of power storage element 32 in any one of full-bridge converter cells 7F included in power converter 2 exceeds the second threshold Vth2, control device 3 controls this converter cell 7F in the fourth operation mode (step S160).

In the following, a case where resistor element 34 is provided in arm 39B, such as full-bridge converter cell 7F in (B) in Fig. 3, will be described briefly.

First, in the first operation mode (step S120), individual cell controller 202F corresponding to each full-bridge converter cell 7F controls switching element 31n1 in arm 39B having resistor element 34, among four arms 39A to 39D that constitute a full bridge, to normally off. Individual cell controller 202F controls switching element 31p1 provided in arm 39A adjacent to arm 39B through middle point 37 connected to input/output terminal P1 to normally on. Individual cell controller 202F controls 31p2 and 31n2 provided in the remaining arm 39C and arm 39D by the pulse width modulation method or the like to repeatedly turn on/off in a complementary manner.

In the second operation mode (step S130), individual cell controller 202F corresponding to each full-bridge converter cell 7F intermittently turns on/off switching element 31n1 in arm 39B having resistor element 34. Here, if the evaluation value representing the voltage of power storage elements 32 in the entire power converter exceeds threshold Vth1 and indicates an overvoltage state as a whole (that is, if overvoltage determination signal OV1 is in an active state), switching elements 31n1 of arms 39B in all full-bridge converter cells 7F are intermittently turned on/off. On the other hand, if the voltage of a certain power storage element 32 exceeds threshold Vth2 and is in an overvoltage state (that is, if overvoltage determination signal OV2 is in an active state), switching element 31n1 in arm 39B of the converter cell 7F in an overvoltage state is intermittently turned on/off, whereas switching element 31n1 in arm 39B of converter cell 7F that is not in an overvoltage state is controlled to an off state. The control of switching elements 31p1, 31p2, and 31n2 provided in the other arms 39A, 39C, and 39D is similar to the case in the first operation mode (step S120).

In the third operation mode (step S150), there is no change in the foregoing. In the fourth operation mode (step S160), individual cell controller 202F corresponding to each full-bridge converter cell 7F controls switching element 31n1 in arm 39B having resistor element 34 to an on state. Here, if the evaluation value representing the voltage of power storage elements 32 in the entire power converter 2 exceeds threshold Vth1 and indicates an overvoltage state as a whole (that is, if overvoltage determination signal OV1 is in an active state), switching elements 31n1 in arms 39B of all full-bridge converter cells 7F are controlled to an on state. On the other hand, if the voltage of a certain power storage element 32 exceeds threshold Vth2 and is in an overvoltage state (that is, if overvoltage determination signal OV2 is in an active state), switching element 31n1 in arm 39B of the converter cell 7F in an overvoltage state is controlled to an on state, whereas switching element 31n1 in arm 39B of converter cell 7F that is not in an overvoltage state is controlled to an off state. Switching elements 31p1, 31p2, and 31n2 provided in the other arms 39A, 39C, and 39D are controlled to an off state.

[Effects of First Embodiment]

As described above, in power conversion device 1 according to the first embodiment, each arm circuit 5, 6 that constitutes power converter 2 includes one or more full-bridge converter cells 7F. Converter cell 7F includes four arms 39 each having semiconductor switching element 31. Among four arms 39, an arm (39C) between the high potential-side node (36p) of the power storage element (32) and a second input/output terminal (P2), or an arm (39B) between the low potential-side node (36n) of the power storage element (32) and a first input/output terminal (P1) has resistor element 34 connected in series with semiconductor switching element 31.

With the configuration above, one or more full-bridge converter cells 7F are provided in each arm circuit 5, 6, whereby short-circuit current can be suppressed or commutated to a bypass circuit at a time of a short-circuit failure of DC circuit 14. The resistor element is connected in series with switching element 31 in the arm 39B or 39C among four arms of each full-bridge converter cell 7F, whereby excessive capacitor voltage can be absorbed in the resistor element by intermittently controlling on/off the switching element 31. As a result, compared with a case where a series circuit including a semiconductor switch and a resistor is connected in parallel with a power storage element, a DC chopper function can be provided in a space efficient manner.

Second Embodiment.

In a case where full-bridge converter cells 7F and half-bridge converter cells 7H are mounted together in each arm circuit, full-bridge converter cell 7F having resistor element 34 can absorb an excessive capacitor voltage in resistor element 34, but half-bridge converter cell 7H with no resistor element 34 is unable to absorb an excessive capacitor voltage. In a second embodiment, when the voltage of each power storage element in power converter 2 rises as a whole, the on/off time of a gate signal supplied to switching element 31 used for output voltage control such as PWM control is adjusted so that a charge period of full-bridge converter cell 7F is longer. As a result, the excessive capacitor voltage can be absorbed in resistor element 34 more efficiently. Hereinafter, controlling an output voltage of each converter cell 7 by phase shift PWM will be specifically described with reference to the drawings. The method can be used for other output voltage control.

[Configuration Example of Individual Cell Controller]

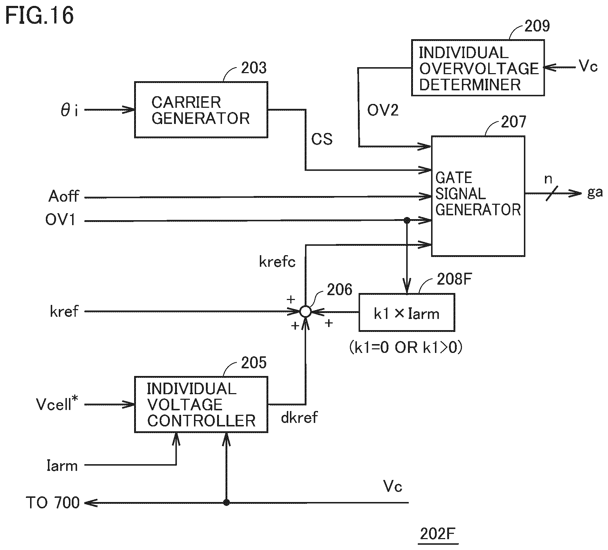

Fig. 16 is a block diagram showing a configuration example of individual cell controller 202F corresponding to full-bridge converter cell 7F in the power conversion device according to the second embodiment. Individual cell controller 202F in Fig. 16 differs from individual cell controller 202F in Fig. 12 in that it further includes a cell voltage command value adjuster 208F for adjusting the magnitude of cell voltage command value krefc when overvoltage determination signal OV1 is activated. In other respects, Fig. 16 is similar to Fig. 12 and the same or corresponding parts are denoted by the same reference signs and will not be further elaborated.

Specifically, cell voltage command value adjuster 208F outputs a product of a constant k1 and arm current Iarm of the corresponding phase to adder 206. Adder 206 adds arm voltage command value kref from basic controller 502, control output dkref of individual voltage controller 205, and an output $k1 \times Iarm$ from cell voltage command value adjuster 208F.

Adder 206 outputs the addition result as cell voltage command value krefc to gate signal generator 207.

The constant k1 is 0 when overvoltage determination signal OV1 is not activated, and is a positive constant when overvoltage determination signal OV1 is activated. Arm current Iarm has the positive sign when arm current Iarm flows in a direction from high potential-side input/output terminal P1 to low potential-side input/output terminal P2. When arm current Iarm flows in the opposite direction, arm current Iarm has the negative sign.

Accordingly, when overvoltage determination signal OV1 is not activated, the value added from cell voltage command value adjuster 208F to adder 206 is 0 and therefore PWM control is not changed.

On the other hand, when overvoltage determination signal OV1 is activated, if arm current Iarm of the corresponding phase flows in the positive direction, cell voltage command value krefc increases by $|k1 \times Iarm|$ (that is, the absolute value of $k1 \times Iarm$). As a result, a period of time during which the PWM signal is at H level increases, so that a period of time during which the voltage of power storage element 32 is connected between input/output terminals P1 and P2 of converter cell 7F increases. In other words, the charge time of power storage element 32 increases.

Conversely, when overvoltage determination signal OV1 is activated, if arm current Iarm of the corresponding phase flows in the negative direction, cell voltage command value krefc decreases by $|k1 \times Iarm|$ (that is, the absolute value of $k1 \times Iarm$). As a result, a period of time during which the PWM signal is at H level decreases, so that a period of time during which the voltage of power storage element 32 is connected between input/output terminals P1 and P2 of converter cell 7F decreases. In other words, the discharge time of power storage element 32 decreases.

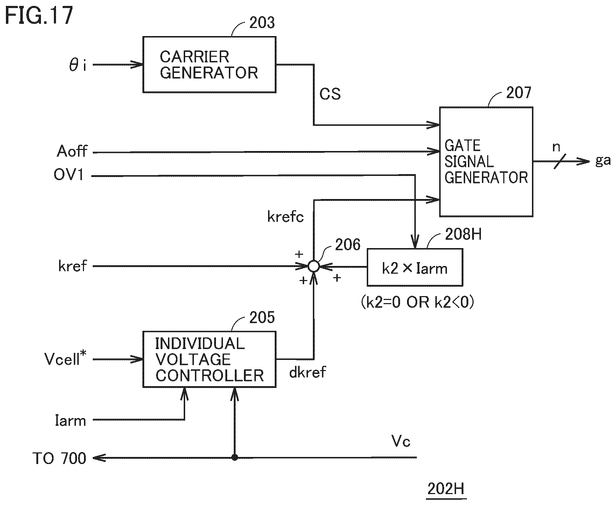

Fig. 17 is a block diagram showing a configuration example of individual cell controller 202H corresponding to half-bridge converter cell 7H in the power conversion device according to the second embodiment. Individual cell controller 202H in Fig. 17 differs from individual cell controller 202H in Fig. 12 in that it further includes a cell voltage command value adjuster 208H that receives overvoltage determination signal OV1 to adjust the magnitude of cell voltage command value krefc when overvoltage determination signal OV1 is activated.

Specifically, cell voltage command value adjuster 208H in Fig. 17 outputs a product of a constant k2 instead of constant k1 and arm current Iarm of the corresponding phase to adder 206. Constant k2 is 0 when overvoltage determination signal OV1 is not activated, and is a negative constant, which is opposite to constant k1, when overvoltage determination signal OV1 is activated. In other respects, Fig. 17 is similar to Fig. 12 and the same or corresponding parts are denoted by the same reference signs and will not be further elaborated.

If the number of full-bridge converter cells 7F is relatively large compared with the total number of converter cells 7 that constitute an arm circuit, the magnitude of cell voltage command value krefc is larger than a value assumed from the sum of arm voltage command value kref and control output dkref of individual voltage controller 205 when overvoltage determination signal OV1 is activated. As a result, an error is caused in control of the arm voltage. Then, using constant k2 having a sign opposite to constant k1, individual cell controller 202H adjusts an output period of positive voltage from half-bridge converter cell 7H to attain a relation opposite to that of full-bridge converter cell 7F. The ratio k1/k2 between constant k1 and constant k2 is determined based on the ratio between the number of full-bridge converter cells 7F and the number of half-bridge converter cells 7H in the arm circuit.

In the foregoing description, in a period of time during which the PWM signal is at H level, the voltage of power storage element 32 is connected between input/output terminals P1 and P2 of converter cell 7F. Conversely, in a period of time during which the PWM signal is at L level, the above k1 is set to 0 or a negative constant, and the above k2 is set to 0 or a positive value when the voltage of power storage element 32 is connected between input/output terminals P1 and P2 of converter cell 7F.

[Control Procedure for Converter Cell by Individual Cell Controller]

The control procedure for converter cells 7F and 7H by individual cell controllers 202F and 202H in Fig. 16 and Fig. 17 described above will be summarized below.

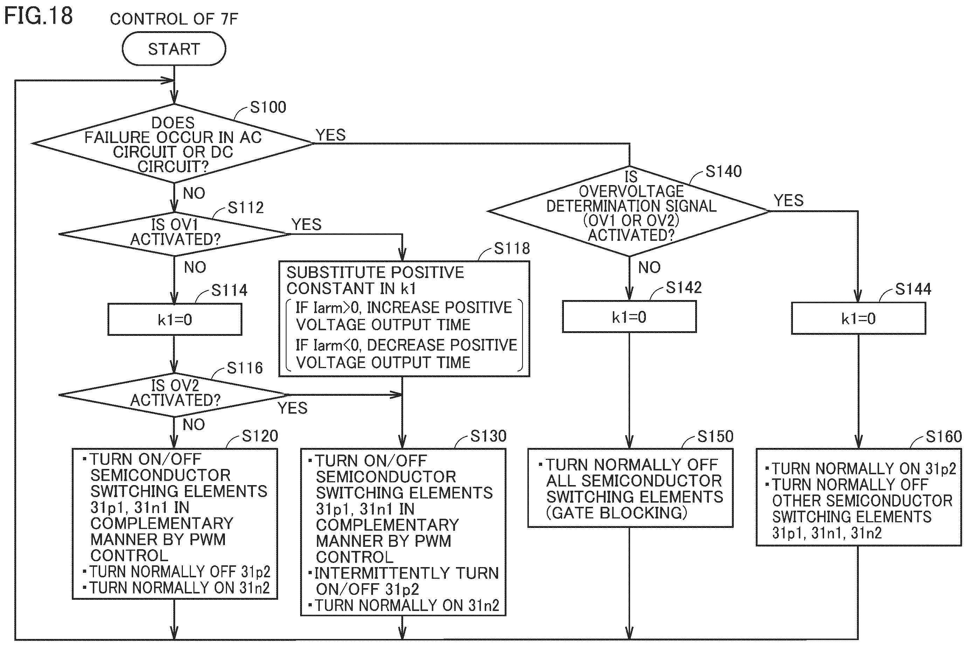

Fig. 18 is a flowchart showing a control procedure for full-bridge converter cell 7F in the power conversion device according to the second embodiment. The flowchart in Fig. 18 differs from the flowchart in Fig. 15 in that steps S112 to S118 are provided instead of step S110, step S142 is provided between step S140 and step S150, and step S144 is provided between step S140 and step S160. In the following, the differences from the flowchart in Fig. 15 will be mainly described, and the steps common to those in Fig. 15 are denoted by the same reference signs and will not be further elaborated.

In the flowchart in Fig. 18, similar to Fig. 15, control device 3 controls full-bridge converter cell 7F in any of the first operation mode (S120), the second operation mode (S130), the third operation mode (S150), and the fourth operation mode (S160), depending on the determination results as to whether a failure occurs in AC circuit 12 or DC circuit 14 (S100), whether overvoltage determination signal OV1 is activated (S112, S140), and whether overvoltage determination signal OV2 is activated (S116, S140). Here, in cases of the control in the first operation mode (S120), the third operation mode (S150), and the fourth operation mode (S160), constant k1 in cell voltage command value adjuster 208F in Fig. 16 is set to 0 (S114, S142, S144). On the other hand, in a case of the control in the second operation mode (S130), when overvoltage determination signal OV1 is activated (YES in S112), constant k1 of cell voltage command value adjuster 208F is set to a positive constant (S118), and when overvoltage determination signal OV1 is not activated (NO in S112), constant k1 of cell voltage command value adjuster 208F is set to 0 (S114).

Specifically, referring to Fig. 18, a case where a failure does not occur in either of AC circuit 12 and DC circuit 14 (NO in step S100), and the voltage of power storage element 32 is not in an overvoltage state, that is, a case where both overvoltage determination signals OV1 and OV2 are in an inactive state (NO in step S112 and NO in step S116) will be described. In this case, control device 3 sets constant k1 of cell voltage command value adjuster 208F to 0 in step S114 and executes control of each full-bridge converter cell 7F in the first operation mode in step S120.

A case where a failure does not occur in either of AC circuit 12 and DC circuit 14 (NO in step S100), but the evaluation value representing the voltage of power storage elements 32 in the entire power converter exceeds threshold Vth1 and indicates an overvoltage state as a whole, that is, a case where overvoltage determination signal OV1 is activated (YES in step S112) will be described. In this case, control device 3 sets constant k1 of cell voltage command value adjuster 208F to a positive constant in step S118 and executes control of each full-bridge converter cell 7F in the second operation mode in step S130.

As a result, when arm current Iarm of the corresponding phase flows in the positive direction (that is, flows in a direction from high potential-side input/output terminal P1 to low potential-side input/output terminal P2), cell voltage command value krefc increases, thereby increasing a period of time in which a positive voltage is output from full-bridge converter cell 7F (that is, a period of time corresponding to the on time of switching element 31p1 in (A) in Fig. 3 and the on time of switching element 31n2 in (B) in Fig. 3, and equivalent to the charge time of power storage element 32). Conversely, when arm current Iarm of the corresponding phase flows in the negative direction, cell voltage command value krefc decreases, thereby decreasing a period of time in which a positive voltage is output from full-bridge converter cell 7F (that is, a period of time corresponding to the on time of switching element 31p1 in (A) in Fig. 3 and the on time of switching element 31n2 in (B) in Fig. 3, and equivalent to the discharge time of power storage element 32). As a result, the excessive capacitor voltage can be absorbed in resistor element 34 more efficiently.

In a period of time during which the PWM signal is at L level, when switching element 31 is controlled so that the voltage of power storage element 32 is output between input/output terminals P1 and P2, it is necessary to set the above constant k1 to a negative constant.

A case where a failure does not occur in either of AC circuit 12 and DC circuit 14 (NO in step S100), and the evaluation value representing the voltage of power storage elements 32 in the entire power converter does not exceed threshold Vth1, indicating a non-overvoltage state as a whole (NO in step S112), but the voltage of a certain power storage element 32 exceeds threshold Vth2 and is in an overvoltage state (YES in step S116) will be described. In this case, control device 3 sets constant k1 of cell voltage command value adjuster 208F to 0 in step S114 and executes control of the converter cell 7F in an overvoltage state in the second operation mode in step S130. As a result, capacitor voltage Vc of the converter cell 7F in an overvoltage state can be absorbed in resistor element 34. Full-bridge converter cell 7F in which capacitor voltage Vc does not exceed threshold Vth2 and which is not in an overvoltage state is controlled in the first operation mode in step S120.

A case where a failure occurs in AC circuit 12 or DC circuit 14 (YES in step S100), but the voltage of power storage element 32 is not in an overvoltage state, that is, a case where both of overvoltage determination signals OV1 and OV2 are in an inactive state (NO in step S140) will be described. In this case, control device 3 sets constant k1 of cell voltage command value adjuster 208F to 0 in step S142 and executes control of each converter cell 7F in the third operation mode in step S150.

A case where a failure occurs in AC circuit 12 or DC circuit 14 (YES in step S100), and the voltage of power storage element 32 is in an overvoltage state, that is, a case where overvoltage determination signal OV1 or OV2 is in an active state (YES in step S140) will be described. In this case, control device 3 sets constant k1 of cell voltage command value adjuster 208F to 0 in step S144. Then, if overvoltage determination signal OV1 is in an active state, control device 3 executes control of each converter cell 7F in the fourth operation mode in step S160. On the other hand, if overvoltage determination signal OV2 corresponding to a certain full-bridge converter cell 7F is activated, control device 3 controls this converter cell 7F in the fourth operation mode in step S160. However, for full-bridge converter cell 7F in which corresponding overvoltage determination signal OV2 is not activated and which is not in an overvoltage state, control device 3 controls this full-bridge converter cell 7F in the third operation mode in step S150.

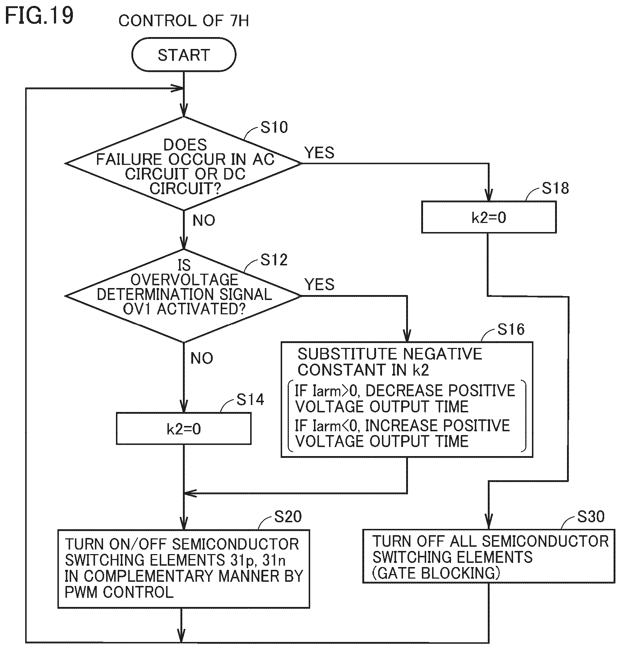

Fig. 19 is a flowchart showing a control procedure for half-bridge converter cell 7H in the power conversion device according to the second embodiment. The flowchart in Fig. 19 differs from the flowchart in Fig. 14 in that steps S12, S14, and S16 are provided between step S10 and step S20, and step S18 is provided between step S10 and step S30. In the following, the differences from Fig. 14 will be mainly described, and the steps common to those in Fig. 14 are denoted by the same reference signs and will not be further elaborated.

Referring to Fig. 19, a case where a failure does not occur in either of AC circuit 12 and DC circuit 14 (NO in step S10), but the evaluation value representing the degree of magnitude of capacitor voltage Vc in converter cells 7 as a whole included in power converter 2 exceeds threshold Vth1, that is, a case where overvoltage determination signal OV1 is activated (YES in step S12) will be described. In this case, control device 3 sets constant k2 of cell voltage command value adjuster 208H in Fig. 17 to a negative constant in step S16, and controls switching elements 31p and 31n of each half-bridge converter cell 7H by pulse width modulation or the like to turn on/off in a complementary manner in step S20.

As a result, when arm current Iarm of the corresponding phase flows in the positive direction, cell voltage command value krefc decreases, thereby decreasing a period of time in which a positive voltage is output from half-bridge converter cell 7H (that is, the on time of switching element 31p in Fig. 2). Conversely, when arm current Iarm of the corresponding phase flows in the negative direction, cell voltage command value krefc increases, thereby increasing a period of time in which a positive voltage is output from half-bridge converter cell 7H (that is, the on time of switching element 31p in Fig. 2). This compensates for a change in output time of positive voltage from full-bridge converter cell 7F thereby preventing an error in arm voltage control.

In a period of time during which the PWM signal is at L level, when switching element 31 is controlled so that the voltage of power storage element 32 is output between input/output terminals P1 and P2, it is necessary to set the above constant k2 to a positive constant.

A case where a failure does not occur in either of AC circuit 12 and DC circuit 14 (NO in step S10), and the evaluation value representing the degree of magnitude of capacitor voltage Vc in converter cells 7 as a whole included in power converter 2 does not exceed threshold Vth1, that is, a case where overvoltage determination signals OV1 is not activated (NO in step S12) will be described. In this case, control device 3 sets constant k2 of cell voltage command value adjuster 208H to 0 in step S14, and controls switching elements 31p and 31n of each half-bridge converter cell 7H by pulse width modulation or the like to turn on/off in a complementary manner in step S20.

If a failure occurs in AC circuit 12 or DC circuit 14 (step S10), control device 3 sets constant k2 of cell voltage command value adjuster 208H to 0 in step S18 and controls semiconductor switching elements 31p and 31n of all half-bridge converter cells 7H that constitute power converter 2 to an off state (that is, gate blocking).

[Effects of Second Embodiment]

As described above, in the power conversion device according to the second embodiment, when the voltage of each power storage element in power converter 2 rises as a whole, the on/off time of a gate signal supplied to switching element 31 used for output voltage control such as PWM control is adjusted so that the charge period of full-bridge converter cell 7F is longer. In the case described above as a specific example, the pulse width of the PWM signal (gate signal) is changed by increasing or decreasing cell voltage command value krefc. As a result, the excessive capacitor voltage can be absorbed in resistor element 34 more efficiently.

Instead of increasing or decreasing cell voltage command value krefc, the pulse width of gate signal ga output from gate signal generator 207 may be directly changed without changing cell voltage command value krefc.

Third Embodiment.

If the voltage of power storage element 32 further rises during gate blocking that brings all switching elements 31 that constitute converter cell 7 to an off state, a gate deblocking state in which on/off control of switching element 31 is repeated may fail to be restored. This is because turning on/off switching element 31 with a rising voltage of power storage element 32 causes a surge voltage, which in turn causes dielectric breakdown of the switching element.

In the case as described above, a third embodiment provides a power conversion device configured such that the voltage of power storage element 32 of each converter cell 7 is discharged at high speed. The power conversion device according to the third embodiment can also be applied when the voltage of each power storage element 32 is discharged at high speed during a normal stop.

[Overall Configuration of Power Conversion Device]

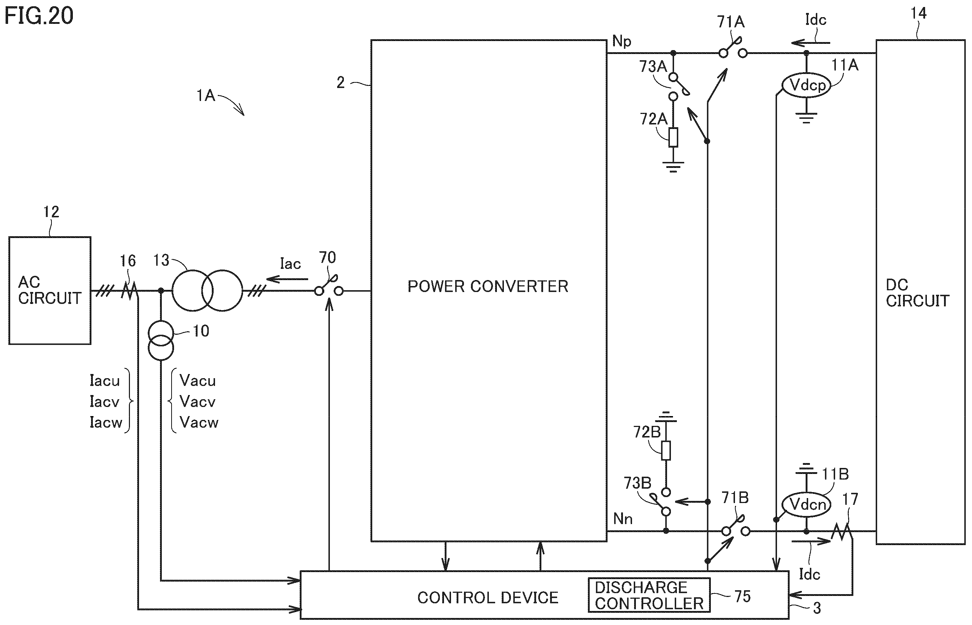

Fig. 20 is a schematic configuration diagram of a power conversion device 1A according to the third embodiment. Power conversion device 1A in Fig. 20 differs from power conversion device 1 in Fig. 1 in that it further includes an AC circuit breaker 70, DC circuit breakers 71A and 71B, discharge resistors 72A and 72B, and switches 73A and 73B.

Control device 3 further includes a discharge controller 75 for controlling the on/off of the above AC circuit breaker 70, DC circuit breakers 71A and 71B, and switches 73A and 73B. Discharge controller 75 further outputs a control signal for controlling the on/off of switching element 31 of the corresponding converter cell 7 to each individual cell controller 202 of each arm controller 503.

As shown in Fig. 20, AC circuit breaker 70 is connected to an AC line between power converter 2 and AC circuit 12. DC circuit breaker 71A is connected to a high potential-side DC line between power converter 2 and DC circuit 14. DC circuit breaker 71B is connected to a low potential-side DC line between power converter 2 and DC circuit 14.

Furthermore, discharge resistor 72A has a first end connected to a high potential-side DC line between power converter 2 and DC circuit breaker 71A through switch 73A. Discharge resistor 72A has a second end connected to a ground electrode. Discharge resistor 72B has a first end connected to a low potential-side DC line between power converter 2 and DC circuit breaker 71B through switch 73B. Discharge resistor 72B has a second end connected to a ground electrode.

[Operation of Discharge Controller]

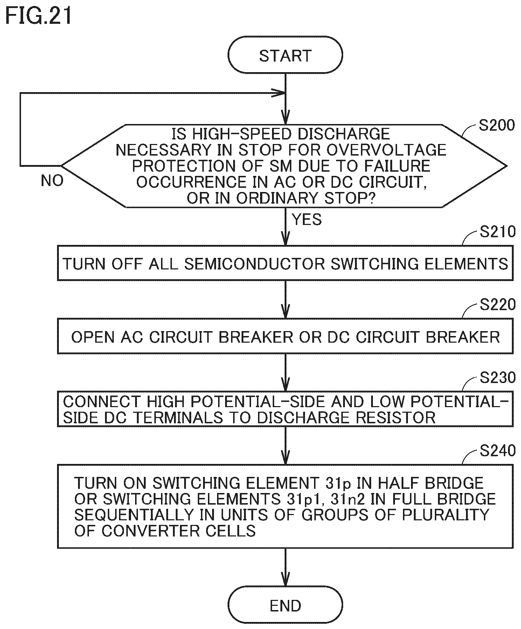

Fig. 21 is a flowchart showing a high-speed discharge procedure by discharge controller 75 in Fig. 20. The high-speed discharge procedure in Fig. 21 is executed in a case where power conversion device 1A is stopped for overvoltage protection of converter cell (SM) 7 due to occurrence of a failure in AC circuit 12 or DC circuit 14, or in a case where each power storage element 32 is discharged at high speed when power conversion device 1A is ordinarily stopped (YES in step S200).

In an initial state, AC circuit breaker 70 and DC circuit breakers 71A and 71B are closed and switches 73A and 73B are open.

First, in step S210, discharge controller 75 controls each individual cell controller 202 to bring all switching elements 31 of each converter cell 7 to an off state. When all switching elements 31 of each converter cell 7 have already been turned off by activation of all-off command signal Aoff output from failure determiner 504 in Fig. 9, it is unnecessary to newly execute step S210.

In the next step S220, discharge controller 75 opens AC circuit breaker 70 and DC circuit breakers 71A and 71B.

In the next step S230, discharge controller 75 brings switches 73A and 73B to a closed state to connect high potential-side DC terminal Np of power converter 2 to discharge resistor 72A and connect low potential-side DC terminal Nn of power converter 2 to discharge resistor 72B.

In the next step S240, discharge controller 75 turns on one or more of switching elements 31 of converter cell 7, sequentially in units of groups of a plurality of converter cells, so that the positive voltage of power storage element 32 of converter cell 7 that constitutes each group is output between input/output terminals P1 and P2. Specifically, in the case of half-bridge converter cell 7H shown in Fig. 2, switching element 31p is controlled to an on state. In a case of full-bridge converter cell 7F shown in Fig. 3 and Fig. 4, switching elements 31p1 and 31n2 are controlled to an on state.

The reason why switching elements 31 of a plurality of converter cells 7 are turned on sequentially in units of groups as described above is to prevent the composite voltage of voltages of power storage elements 32 from exceeding the withstand voltage of the DC lines, discharge resistors 72A, 72B, and the like. There is no problem of surge voltage when switching element 31 is turned on merely once.

[Effects of Third Embodiment]

With the above procedure, the voltages of power storage elements 32 of all converter cells 7 that constitute power converter 2 can be discharged at high speed.

Fourth Embodiment.

One of advantages of self-commutated HVDC transmission is that, unlike a line-commutated converter, power can be fed even to a passive AC power system with no generator. For example, this is applicable at a time of a black start of an AC power system, and when power is fed from an offshore wind power generation system to an onshore AC power system.

In a case of offshore wind power, if a failure occurs in an onshore AC power system, the amount of power transmission to the onshore power system temporarily drops. However, since a wind turbine is unable to suppress an output power instantaneously, excessive energy is accumulated as capacitor voltage in an HVDC converter. Accordingly, when the capacitor voltage in the HVDC converter becomes overvoltage, causing HVDC to stop, it takes time to restart the wind turbine and the HVDC converter even after removal of the failure in the onshore AC power system, consequently causing frequency fluctuations and power supply problem in the onshore AC power system.

When the HVDC converter is configured with power conversion devices 1, 1A disclosed in the first to third embodiments, the capacitor voltage can be consumed by the resistor element provided in full-bridge converter cell 7F. As a result, a stop of HVDC due to overvoltage of capacitor voltage can be prevented. The specifics will be described below with reference to the drawings.

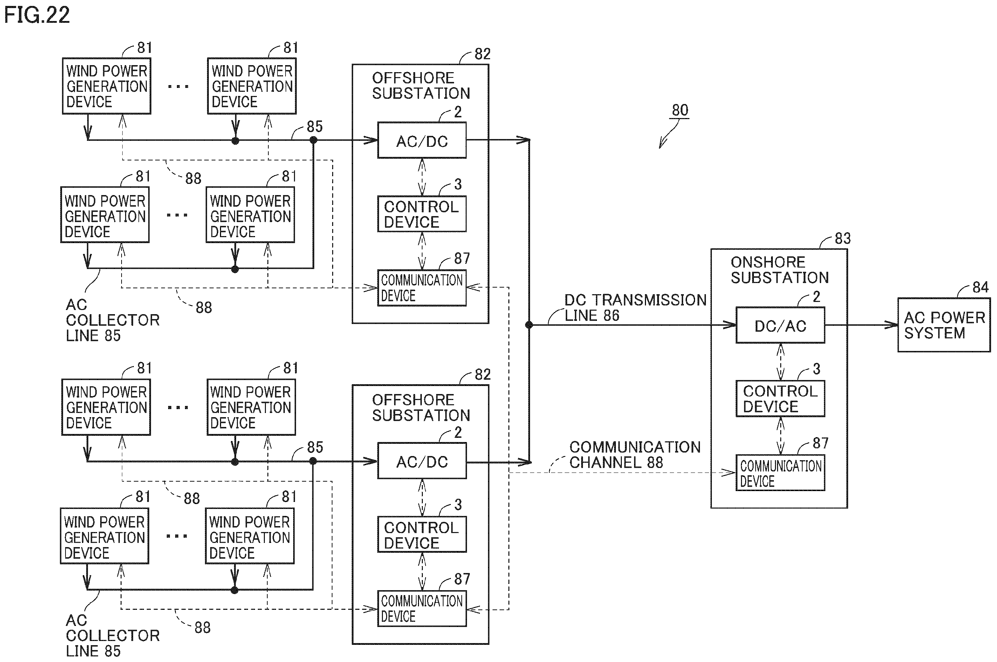

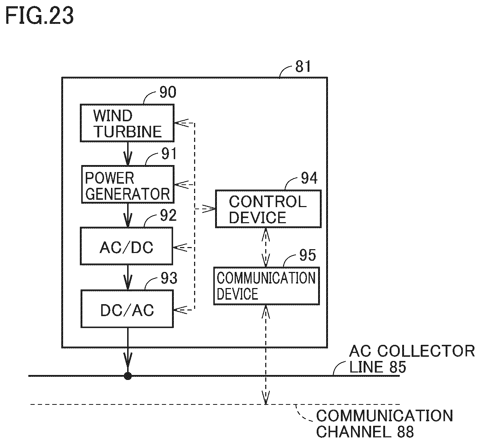

Fig. 22 is a block diagram showing a configuration example of an offshore wind power generation system 80. Fig. 23 is a block diagram showing a configuration example of a wind power generation device 81 that constitutes offshore wind power generation system 80 in Fig. 22.

Referring to Fig. 22 and Fig. 23, offshore wind power generation system 80 includes a number of wind power generation devices 81 provided offshore, an AC collector line 85, one or more offshore substations 82, a DC transmission line 86, and an onshore substation 83.

Wind power generation device 81 includes a wind turbine 90, a power generator 91, an AC/DC converter 92, a DC/AC converter 93, a control device 94, and a communication device 95.

Specifically, power generator 91 converts rotational energy of wind turbine 90 into an AC power. AC/DC converter 92 converts the AC power output from power generator 91 into a DC power. DC/AC converter 93 converts the DC power output from AC/DC converter 92, for example, into an AC power of high voltage such as 66 kV and outputs the converted AC power to AC collector line 85. Control device 94 controls the operation of wind turbine 90, power generator 91, AC/DC converter 92, and DC/AC converter 93. Communication device 95 is used for control device 94 to communicate with the outside of wind power generation device 81 via a communication channel 88.

Offshore substation 82 converts AC power collected from a number of corresponding wind power generation devices 81 through AC collector lines 85 into a DC power. The converted DC power is transmitted to onshore substation 83 through DC transmission line 86.

More specifically, offshore substation 82 includes power converter 2 and control device 3 described in the first to third embodiments, and a communication device 87 for control device 3 to communicate with the outside of offshore substation 82 through communication channel 88. Power converter 2 is used as an AC/DC converter that converts an AC power into a DC power.

Onshore substation 83 converts the DC power transmitted through DC transmission line 86 into an AC power and feeds the AC power to onshore AC power system 84.

More specifically, onshore substation 83 includes power converter 2 and control device 3 described in the first to third embodiments, and a communication device 87 for control device 3 to communicate with the outside of onshore substation 83 through communication channel 88. Power converter 2 is used as a DC/AC converter that converts a DC power into an AC power.

Communication device 95 of wind power generation device 81, communication device 87 of offshore substation 82, and communication device 87 of onshore substation 83 constitute a communication system. Control device 94 of wind power generation device 81, control device 3 of offshore substation 82, and control device 3 of onshore substation 83 use this communication system to communicate with each other to control power generation and power conversion in a coordinated manner.

For example, if a failure occurs in onshore AC power system 84, output power from power converter 2 of onshore substation 83 to AC power system 84 temporarily decreases. Basically, in response to this output decrease, control device 94 of wind power generation device 81 controls wind turbine 90 so that output power is suppressed, and control device 3 of offshore substation 82 controls power converter 2 so that output power is suppressed. However, since wind power generation device 81 is unable to instantaneously suppress output power, excessive energy is accumulated as capacitor voltage of each converter cell 7 of power converter 2 in offshore substation 82 and onshore substation 83.

As described in the first to third embodiments, power converter 2 includes full-bridge converter cell 7F with resistor element 34. Therefore, when the capacitor voltage increases abnormally, the resistor element 34 can consume the capacitor voltage, thereby preventing a stop of offshore wind power generation system 80.

Embodiments disclosed here should be understood as being illustrative rather than being limitative in all respects. The scope of the subject application is shown not in the foregoing description but in the claims, and it is intended that all modifications that come within the meaning and range of equivalence to the claims are embraced here.

REFERENCE SIGNS LIST

1, 1A power conversion device, 2 power converter, 3, 94 control device, 4 leg circuit, 5, 6 arm circuit, 7 converter cell, 7F full-bridge converter cell, 7H half-bridge converter cell, 8A, 8B reactor, 9A, 9B arm current detector, 10 AC voltage detector, 11A, 11B DC voltage detector, 12 AC circuit, 13 transformer, 14 DC circuit, 16 AC current detector, 17 DC current detector, P1, P2 input/output terminal, 30F full-bridge circuit, 30H half-bridge circuit, 31 semiconductor switching element, 32 power storage element (capacitor), 33 voltage detector, 34 resistor element, 35, 35A rectifier element (diode), 39A third arm, 39B fourth arm, 39C first arm, 39D second arm, 40 cell block, 41 bypass circuit, 50 input converter, 51 sample hold circuit, 52 multiplexer, 53 A/D converter, 54 CPU, 55 RAM, 56 ROM, 57 input/output interface, 58 auxiliary storage device, 59 bus, 70 AC circuit breaker, 71A, 71B DC circuit breaker, 72A, 72B discharge resistor, 73A, 73B switch, 75 discharge controller, 80 offshore wind power generation system, 81 wind power generation device, 82 offshore substation, 83 onshore substation, 84 AC power system, 85 AC collector line, 86 DC transmission line, 87, 95 communication device, 88 communication channel, 90 wind turbine, 91 power generator, 92 AC/DC converter, 93 DC/AC converter, 202, 202F, 202H individual cell controller, 203 carrier generator, 205 individual voltage controller, 206 adder, 207 gate signal generator, 208 overvoltage determiner, 208F, 208H cell voltage command value adjuster, 210 subtractor, 211 controller, 213 multiplier, 501 switching control unit, 502 basic controller, 503 arm controller, 504 failure determiner, 505 overvoltage determiner, 601 arm voltage command generator, 603 AC current controller, 604 circulating current calculator, 605 circulating current controller, 606 command distributor, 610 voltage macro controller, 611, 613 subtractor, 612 all voltage controller, 614 inter-group voltage controller, 615 adder, 700 voltage evaluation value generator, Aoff all-off command signal, CS carrier signal, Izref1 first current command value, Izref2 second current command value (circulating current command value), Nn low potential-side DC terminal, Np high potential-side DC terminal, Nu, Nv, Nw AC input terminal, OV1, OV2 overvoltage determination signal, kref, krefn, krefp arm voltage command value, krefc cell voltage command value.

**Claims**

1. A power conversion device comprising:

    a power converter including an arm circuit including a plurality of converter cells connected in cascade; and
    a control device to control the power converter,
    each of the converter cells including:

        a first input/output terminal on a high potential side and a second input/output terminal on a low potential side;
        a bridge circuit including a plurality of semiconductor switching elements; and
        a power storage element connected to the first input/output terminal and the second input/output terminal through the bridge circuit, wherein

    one or more of the converter cells are full-bridge converter cells,
    the bridge circuit of each of the full-bridge converter cells includes:

        a first arm connecting a high potential-side node of the power storage element to the first input/output terminal;
        a second arm connecting a low potential-side node of the power storage element to the first input/output terminal;
        a third arm connecting the high potential-side node of the power storage element to the second input/output terminal; and
        a fourth arm connecting the low potential-side node of the power storage element to the second input/output terminal,

    each of the first arm, the second arm, the third arm, and the fourth arm has a semiconductor switching element, and
    the second arm or the third arm includes a resistor element connected in series with the semiconductor switching element.

2. The power conversion device according to claim 1, wherein the second arm or the third arm further includes a rectifier element connected in parallel with the resistor element and such that a reverse bias direction is a forward direction.

3. The power conversion device according to claim 1, wherein the second arm or the third arm further includes a rectifier element connected in parallel with a combination of the resistor element and the semiconductor switching element and such that a reverse bias direction is a forward direction.

4. The power conversion device according to any one of claims 1 to 3, wherein

    in a case where the second arm has the resistor element, the control device, in a first operation mode,
    turns normally off the semiconductor switching element of the second arm,
    turns normally on the semiconductor switching element of the first arm, and
    repeatedly turns on and off the semiconductor switching elements of the third arm and the fourth arm in a complementary manner, and
    in a case where the third arm has the resistor element, the control device, in a first operation mode,
    turns normally off the semiconductor switching element of the third arm,
    turns normally on the semiconductor switching element of the fourth arm, and
    repeatedly turns on and off the semiconductor switching elements of the first arm and the second arm in a complementary manner.

5. The power conversion device according to claim 4, wherein

    in a case where the second arm has the resistor element, the control device, in a second operation mode,

intermittently turns on and off the semiconductor switching element of the second arm,

turns normally on the semiconductor switching element of the first arm, and

repeatedly turns on and off the semiconductor switching elements of the third arm and the fourth arm in a complementary manner, and

in a case where the third arm has the resistor element, the control device, in a second operation mode,

intermittently turns on and off the semiconductor switching element of the third arm,

turns normally on the semiconductor switching element of the fourth arm, and

repeatedly turns on and off the semiconductor switching elements of the first arm and the second arm in a complementary manner.

6. The power conversion device according to claim 5, wherein when the control device is controlling each full-bridge converter cell included in the power converter in the first operation mode, in a case where an evaluation value representing a degree of magnitude of voltage of the power storage elements in the converter cells as a whole included in the power converter exceeds a first threshold, the control device controls each full-bridge converter cell included in the power converter in the second operation mode.

7. The power conversion device according to claim 5 or 6, wherein when the control device is controlling each full-bridge converter cell included in the power converter in the first operation mode, in a case where a voltage value of the power storage element of any one full-bridge converter cell included in the power converter exceeds a second threshold, the control device controls the converter cell in the second operation mode.

8. The power conversion device according to any one of claims 5 to 7, wherein, the control device, in the second operation mode, controls a number of times of on and off, an on time, and an off time of the semiconductor switching element of the first arm, based on a measured value or estimated value of temperature of the resistor element of the first arm.

9. The power conversion device according to any one of claims 5 to 8, wherein the control device, in a third operation mode, turns normally off the semiconductor switching element of each of the first arm, the second arm, the third arm, and the fourth arm.

10. The power conversion device according to claim 9, wherein

the power converter is connected between a DC circuit and an AC circuit, and

when the control device is controlling each full-bridge converter cell included in the power converter in the first operation mode, in a case where a failure occurs in the DC circuit or the AC circuit, the control device controls each full-bridge converter cell included in the power converter in the third operation mode.

11. The power conversion device according to claim 9 or 10, wherein

in each of the first arm, the second arm, the third arm, and the fourth arm, a rectifier element is connected in parallel with the semiconductor switching element and such that a reverse bias direction is a forward direction,

in a case where the second arm has the resistor element, the control device, in a fourth operation mode, turns normally on the semiconductor switching element of the second arm and turns normally off the semiconductor switching element of each of the first arm, the third arm, and the fourth arm, and

in a case where the third arm has the resistor element, the control device, in a fourth operation mode, turns normally on the semiconductor switching element of the third arm and turns normally off the semiconductor switching element of each of the first arm, the second arm, and the fourth arm.

12. The power conversion device according to claim 11, wherein when the control device is controlling each full-bridge converter cell included in the power converter in the third operation mode, in a case where an evaluation value representing a degree of magnitude of voltage of the power storage elements in the converter cells as a whole included in the power converter exceeds a third threshold, the control device controls each full-bridge converter cell included in the power converter in the fourth operation mode.

13. The power conversion device according to claim 11 or 12, wherein when the control device is controlling each full-bridge converter cell included in the power converter in the third operation mode, in a case where a voltage value of the power storage element of any one full-bridge converter cell included in the power converter exceeds a fourth threshold, the control device controls the converter cell in the fourth operation mode.

**14.** The power conversion device according to any one of claims 5 to 13, wherein

in a case where the second arm has the resistor element, when arm current flows in a first direction from a high potential side to a low potential side of the converter cells connected in cascade, the control device, in the second operation mode, sets an on time of the semiconductor switching element in the fourth arm to be longer than in the first operation mode,

in a case where the second arm has the resistor element, when arm current flows in a second direction opposite to the first direction, the control device, in the second operation mode, sets an on time of the semiconductor switching element in the fourth arm to be shorter than in the first operation mode,

in a case where the third arm has the resistor element, when arm current flows in the first direction, the control device, in the second operation mode, sets an on time of the semiconductor switching element in the first arm to be longer than in the first operation mode, and

in a case where the third arm has the resistor element, when arm current flows in the second direction, the control device, in the second operation mode, sets an on time of the semiconductor switching element in the first arm to be shorter than in the first operation mode.

**15.** The power conversion device according to claim 14, wherein

one or more of the converter cells connected in cascade are half-bridge converter cells,
each of the half-bridge converter cells including:

a first semiconductor switching element connected between the first input/output terminal and the second input/output terminal; and
a second semiconductor switching element connected between the first input/output terminal and a first end of the power storage element,

the control device, in the first operation mode and the second operation mode, repeatedly turns on and off the first semiconductor switching element and the second semiconductor switching element in a complementary manner,
when the arm current flows in the first direction in the second operation mode, the control device sets an on time of the second semiconductor switching element to be shorter than in the first operation mode, and
when the arm current flows in the second direction in the second operation mode, the control device sets an on time of the second semiconductor switching element to be longer than in the first operation mode.

**16.** The power conversion device according to any one of claims 4 to 15, wherein

in a case where the second arm has the resistor element, each of the semiconductor switching elements in the first arm and the second arm is formed on a silicon substrate, and each of the semiconductor switching elements in the third arm and the fourth arm is formed on a silicon carbide substrate, and

in a case where the third arm has the resistor element, each of the semiconductor switching elements in the third arm and the fourth arm is formed on a silicon substrate, and each of the semiconductor switching elements in the first arm and the second arm is formed on a silicon carbide substrate.

**17.** The power conversion device according to any one of claims 1 to 16, wherein

the converter cells connected in cascade are divided into one or more blocks adjacent to each other,
each of the one or more blocks includes at least one the full-bridge converter cell, and
the power conversion device further comprises one or more bypass circuits respectively corresponding to the one or more blocks and each connected in parallel with a corresponding block.

**18.** The power conversion device according to any one of claims 1 to 17, wherein

one or more of the converter cells connected in cascade are half-bridge converter cells, and
the power storage element of each of the half-bridge converter cells has a capacity larger than a capacity of the power storage element of each of the full-bridge converter cells.

**19.** The power conversion device according to any one of claims 1 to 18, wherein

the power converter is connected between a DC circuit and an AC circuit,

the power conversion device further comprising:

an AC circuit breaker connected to an AC line between the power converter and the AC circuit;
a DC circuit breaker connected to a DC line between the power converter and the DC circuit; and
a discharge resistor having a first end connected to the DC line between the DC circuit breaker and the power converter through a switch, and a second end connected to a ground electrode,
when the power conversion device is to be stopped, the control device
turns off all of the semiconductor switching elements included in each of the converter cells connected in cascade,
opens the AC circuit breaker and the DC circuit breaker, and
thereafter, with the switch closed, switches the semiconductor switching elements sequentially in units of groups of a plurality of converter cells that are one or more of the converter cells connected in cascade, so that, for each of the converter cells included in each of the groups, a voltage of the power storage element is output from between the first input/output terminal and the second input/output terminal.

20. An offshore wind power generation system comprising:

a plurality of wind power generation devices;
an offshore substation connected to the wind power generation devices through an AC collector line, the offshore substation converting an AC power into a DC power; and
an onshore substation connected to the offshore substation through a DC transmission line, the onshore substation converting a DC power into an AC power and supplying the AC power to an onshore AC power system, wherein
the wind power generation devices, the offshore substation, and the onshore substation communicate with each other to control power generation in the wind power generation devices and power conversion in the offshore substation and the onshore substation in a coordinated manner, and
each of the offshore substation and the onshore substation includes the power conversion device according to any one of claims 1 to 19.

FIG.1

FIG.2

# FIG.3

(A)

(B)

FIG.4

(A)

(B)

FIG.5

EP 4 589 834 A1

FIG.6

FIG.7

FIG.8

# FIG.9

FIG.10

ARM VOLTAGE COMMAND GENERATOR — 601

502

606 COMMAND DISTRIBUTOR

Vdcref
Vsn
Vac
Iac
Iacref

603 AC CURRENT CONTROLLER → Vcp

→ krefp, krefn

604 CIRCULATING CURRENT CALCULATOR → Iz

605 CIRCULATING CURRENT CONTROLLER

Iarmp
Iarmn

→ Vzp

611

Vc* +/− 

612 ALL VOLTAGE CONTROLLER

Izref2

Izref1

Vcgall
Vcg { 613 +/−
Vcgr

614 INTER-GROUP VOLTAGE CONTROLLER

610

→ Iarmp, Iarmn

EP 4 589 834 A1

# FIG.11

ARM CONTROLLER

kref
Vcell*
Iarm
Vzp
Aoff

OV1

503

202H

INDIVIDUAL
CELL
CONTROLLER

202H

INDIVIDUAL
CELL
CONTROLLER

202F

INDIVIDUAL
CELL
CONTROLLER

202F

INDIVIDUAL
CELL
CONTROLLER

ga      n      7H

CONVERTER
CELL (SM)

Vc

n      7H

SM

n      7F

SM

n      7F

SM

TO 700
(FIG. 9)

FIG.12

FIG.13

FIG.14

CONTROL OF 7H

START

DOES
FAILURE OCCUR
IN AC CIRCUIT OR DC
CIRCUIT? — S10

YES

NO

TURN ON/OFF SEMICONDUCTOR
SWITCHING ELEMENTS 31p, 31n
IN COMPLEMENTARY MANNER
BY PWM CONTROL — S20

TURN OFF ALL SEMICONDUCTOR
SWITCHING ELEMENTS (GATE
BLOCKING) — S30

FIG.15

CONTROL OF 7F

START

S100
DOES FAILURE OCCUR IN AC CIRCUIT OR DC CIRCUIT?

NO → 
YES →

S110
IS OVERVOLTAGE DETERMINATION SIGNAL (OV1 OR OV2) ACTIVATED?

NO → S120
YES → S130

S120
· TURN ON/OFF SEMICONDUCTOR SWITCHING ELEMENTS 31p1, 31n1 IN COMPLEMENTARY MANNER BY PWM CONTROL
· TURN NORMALLY OFF 31p2
· TURN NORMALLY ON 31n2

S130
· TURN ON/OFF SEMICONDUCTOR SWITCHING ELEMENTS 31p1, 31n1 IN COMPLEMENTARY MANNER BY PWM CONTROL
· INTERMITTENTLY TURN ON/OFF 31p2
· TURN NORMALLY ON 31n2

S140
IS OVERVOLTAGE DETERMINATION SIGNAL (OV1 OR OV2) ACTIVATED?

NO → S150
YES → S160

S150
· TURN NORMALLY OFF ALL SEMICONDUCTOR SWITCHING ELEMENTS (GATE BLOCKING)

S160
· TURN NORMALLY ON 31p2
· TURN NORMALLY OFF OTHER SEMICONDUCTOR SWITCHING ELEMENTS 31p1, 31n1, 31n2

# FIG.16

$$\theta i \longrightarrow \boxed{\begin{array}{c} \text{CARRIER} \\ \text{GENERATOR} \end{array}} \;\; 203$$

INDIVIDUAL OVERVOLTAGE DETERMINER — 209

Vc

OV2

CS

207

Aoff

OV1

GATE SIGNAL GENERATOR

n

ga

krefc

206

208F

kref

$k1 \times Iarm$

$(k1=0 \; OR \; k1>0)$

205

INDIVIDUAL VOLTAGE CONTROLLER

Vcell*

dkref

Iarm

Vc

TO 700

202F

FIG.17

# FIG.18

CONTROL OF 7F

START

S100 — DOES FAILURE OCCUR IN AC CIRCUIT OR DC CIRCUIT?
- YES →
- NO ↓

S112 — IS OV1 ACTIVATED?
- YES →
- NO ↓

S114 — $k1=0$

S116 — IS OV2 ACTIVATED?
- YES →
- NO ↓

S118 — SUBSTITUTE POSITIVE CONSTANT IN k1
IF Iarm>0, INCREASE POSITIVE VOLTAGE OUTPUT TIME
IF Iarm<0, DECREASE POSITIVE VOLTAGE OUTPUT TIME

S140 — IS OVERVOLTAGE DETERMINATION SIGNAL (OV1 OR OV2) ACTIVATED?
- YES →
- NO ↓

S142 — $k1=0$

S144 — $k1=0$

S120
- TURN ON/OFF SEMICONDUCTOR SWITCHING ELEMENTS 31p1, 31n1 IN COMPLEMENTARY MANNER BY PWM CONTROL
- TURN NORMALLY OFF 31p2
- TURN NORMALLY ON 31n2

S130
- TURN ON/OFF SEMICONDUCTOR SWITCHING ELEMENTS 31p1, 31n1 IN COMPLEMENTARY MANNER BY PWM CONTROL
- INTERMITTENTLY TURN ON/OFF 31p2
- TURN NORMALLY ON 31n2

S150
- TURN NORMALLY OFF ALL SEMICONDUCTOR SWITCHING ELEMENTS (GATE BLOCKING)

S160
- TURN NORMALLY ON 31p2
- TURN NORMALLY OFF OTHER SEMICONDUCTOR SWITCHING ELEMENTS 31p1, 31n1, 31n2

FIG.19    CONTROL OF 7H

START

S10
DOES FAILURE OCCUR IN AC CIRCUIT OR DC CIRCUIT?

YES →

NO ↓

S18
k2=0

S12
IS OVERVOLTAGE DETERMINATION SIGNAL OV1 ACTIVATED?

YES →

NO ↓

S16
SUBSTITUTE NEGATIVE CONSTANT IN k2
IF Iarm>0, DECREASE POSITIVE VOLTAGE OUTPUT TIME
IF Iarm<0, INCREASE POSITIVE VOLTAGE OUTPUT TIME

S14
k2=0

S20
TURN ON/OFF SEMICONDUCTOR SWITCHING ELEMENTS 31p, 31n IN COMPLEMENTARY MANNER BY PWM CONTROL

S30
TURN OFF ALL SEMICONDUCTOR SWITCHING ELEMENTS (GATE BLOCKING)

FIG.20

EP 4 589 834 A1

FIG.21

```
                    ┌─────────────┐
                    │   START     │
                    └─────────────┘
                           │
        ┌──────────────────▼──────────────────────────┐  S200
        │         IS HIGH-SPEED DISCHARGE             │
        │   NECESSARY IN STOP FOR OVERVOLTAGE         │
        │   PROTECTION OF SM DUE TO FAILURE           │
    NO  │   OCCURRENCE IN AC OR DC CIRCUIT,           │
        │         OR IN ORDINARY STOP?                │
        └──────────────────┬──────────────────────────┘
                          YES │
                            ▼                    S210
        ┌────────────────────────────────────────────────┐
        │  TURN OFF ALL SEMICONDUCTOR SWITCHING ELEMENTS │
        └────────────────────┬───────────────────────────┘
                             │                   S220
                             ▼
        ┌────────────────────────────────────────────────┐
        │  OPEN AC CIRCUIT BREAKER OR DC CIRCUIT BREAKER │
        └────────────────────┬───────────────────────────┘
                             │                   S230
                             ▼
        ┌────────────────────────────────────────────────┐
        │ CONNECT HIGH POTENTIAL-SIDE AND LOW POTENTIAL- │
        │ SIDE DC TERMINALS TO DISCHARGE RESISTOR        │
        └────────────────────┬───────────────────────────┘
                             │                   S240
                             ▼
        ┌────────────────────────────────────────────────┐
        │ TURN ON SWITCHING ELEMENT 31p IN HALF BRIDGE   │
        │ OR SWITCHING ELEMENTS 31p1, 31n2 IN FULL BRIDGE│
        │ SEQUENTIALLY IN UNITS OF GROUPS OF PLURALITY   │
        │ OF CONVERTER CELLS                             │
        └────────────────────┬───────────────────────────┘
                             ▼
                    ┌─────────────┐
                    │    END      │
                    └─────────────┘
```

FIG.22

FIG.23

## INTERNATIONAL SEARCH REPORT

| International application No. |
| --- |
| **PCT/JP2022/034403** |

| A. | CLASSIFICATION OF SUBJECT MATTER |
| --- | --- |

*H02M 7/49*(2007.01)i; *H02M 7/48*(2007.01)i
FI:   H02M7/49; H02M7/48 M

According to International Patent Classification (IPC) or to both national classification and IPC

| B. | FIELDS SEARCHED |
| --- | --- |

Minimum documentation searched (classification system followed by classification symbols)

H02M7/49; H02M7/48

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| A | JP 2017-184496 A (TOSHIBA MITSUBISHI-ELECTRIC IND SYSTEM CORP) 05 October 2017 (2017-10-05)<br>entire text, all drawings | 1-20 |
| A | JP 3-135323 A (MITSUBISHI ELECTRIC CORP) 10 June 1991 (1991-06-10)<br>entire text, all drawings | 1-20 |
| A | JP 2010-503221 A (SIEMENS AKTIENGESELLSCHAFT) 28 January 2010 (2010-01-28)<br>entire text, all drawings | 1-20 |
| A | JP 2022-17129 A (TOSHIBA CORP) 25 January 2022 (2022-01-25)<br>entire text, all drawings | 1-20 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 November 2022** | **29 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/034403**

| Patent document cited in search report | | | Publication date (day/month/year) | Patent family member(s) | | | Publication date (day/month/year) |
|---|---|---|---|---|---|---|---|
| JP | 2017-184496 | A | 05 October 2017 | (Family: none) | | | |
| JP | 3-135323 | A | 10 June 1991 | (Family: none) | | | |
| JP | 2010-503221 | A | 28 January 2010 | US | 2009/0262477 | A1 | |
| | | | | entire text, all drawings | | | |
| | | | | WO | 2008/028435 | A1 | |
| | | | | CN | 101512862 | A | |
| JP | 2022-17129 | A | 25 January 2022 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011163702
- WO 2016167117 A
- US 20130308235